# EUROPÄISCHE PATENTSCHRIFT

(11) **EP 1 301 547 B1**
(45) Veröffentlichungstag und Bekanntmachung des Hinweises auf die Patenterteilung: **15.09.2004**
(21) Anmeldenummer: 00984984.5
(22) Anmeldetag: 08.11.2000
(51) Int. Cl.: C08F 212/32, C09D 125/02

(54) **WÄSSRIGE PRIMÄRDISPERSIONEN UND BESCHICHTUNGSSTOFFE, VERFAHREN ZU IHRER HERSTELLUNG UND IHRE VERWENDUNG**
AQUEOUS PRIMARY DISPERSIONS AND COATING MATTERS, A METHOD FOR PRODUCING SAME AND THE USE THEREOF
DISPERSIONS PRIMAIRES ET SUBSTANCES DE REVETEMENT AQUEUSES, LEUR PROCEDE DE PRODUCTION ET LEUR UTILISATION

(30) Priorität: 11.12.1999 DE 19959923
(43) Veröffentlichungstag der Anmeldung: 16.04.2003
(73) Patentinhaber: BASF Coatings Aktiengesellschaft, 48165 Münster (DE)
(72) Erfinder: BENDIX, Maximilian, 48165 Münster (DE); CLAUSS, Reinhold, 48565 Steinfurt (DE); NICKOLAUS, Ralf, 48317 Drensteinfurt (DE); BREMSER, Wolfgang, 48165 Münster (DE)
(74) Vertreter: Fitzner, Uwe, Dr.
(86) Internationale Anmeldenummer: PCT/EP2000/011006
(87) Internationale Veröffentlichungsnummer: WO 2001/042310

(56) Entgegenhaltungen:
- WO-A-95/34586
- DE-A- 19 628 143

## Beschreibung

Die vorliegende Erfindung betrifft wäßrige Primärdispcrsionen und Beschichtungsstoffe, die dispergierte und/oder emulgierte, feste und/oder flüssige Polymerpartikel und/oder dispergierte feste Kern-Schale-Partikel eines Teilchendurchmessers ≤ 500 nm enthalten. Außerdem betrifft die vorliegende Erfindung ein Verfahren zur Herstellung der wäßrigen Primärdispersionen und Beschichtungsstoffe durch die kontrollierte radikalische Mikro- und Miniemulsionspolymerisation. Des weiteren betrifft die vorliegende Erfindung die Verwendung der wäßrigen Primärdispersionen und Beschichtungsstoffe zur Herstellung ein- oder mehrschichtiger Klarlackierungen und ein- oder mehrschichtiger farb- und/oder effektgebender Lackierungen in der Automobilerst- und -reparaturlackierung, der industriellen Lackierung, inklusive Container Coating, Coil Coating und der Beschichtung elektrotechnischer Bauteile, und der Möbellackierung.

Mikro- und Miniemulsionen sind Dispersionen aus Wasser, einer Ölphase und einer oder mehreren oberflächenaktiven Substanzen, die eine Tröpfchengrößen von 5 bis 50 nm (Mikroemulsionen) oder von 50 bis 500 nm aufweisen. Dabei gelten Mikroemulsionen als thermodynamisch stabil, wogegen die Miniemulsionen als metastabil angesehen werden (vgl. Emulsion Polymerization and Emulsion Polymers, Editoren. P. A. Lovell und Mohamed S. El-Aasser, John Wiley and Sons, Chichester, New York, Weinheim, 1997, Seiten 700 und folgende; Mohamed S. EI-Aasser, Advances in Emulsion Polymerization and Latex Technology, 30^{th} Annual Short Course, Volume 3, June 7-11, 1999, Emulsion Polymers Institute, Lehigh University, Bethlehem, Pennsylvania, U.S.A.). Beide Arten von Dispersionen finden in der Technik breite Anwendung beispielsweise in Reinigern, Kosmetika oder Körperpflegeprodukten. Sie können aber auch anstelle der üblichen Makroemulsionen, bei denen Tröpfchengrößen >1.000 nm vorliegen, für Polymerisationsreaktionen verwendet werden.

Hierbei wäre es wünschenswert, die radikalische Polymerisation in der Mikro- und Miniemulsion in der sogenannten batch-Fahrweise durchzuführen, bei der die gesamte Menge der Monomeren in einem wäßrigem Medium vorgelegt, emulgiert und anschließend auspolymerisiert wird. Hierdurch könnten die Probleme, welche sich aus der Zulauffahrweise ergeben, von vornherein vermieden werden. Diese bestehen insbesondere in einem vergleichsweise hohen meß- und regeltechnischen sowie apparativen Aufwand und darin, daß die zulaufenden Monomeren nicht zum Polymerisationsort gelangen, sondern wie bei der Makroemulsionspolymerisation als Monomerenreservoir für die gestarteten Monomerentröpfchen dienen. Dadurch ändern diese laufend ihre Zusammensetzung, was im Falle ihrer nachträglichen Initiierung zur Uneinheitlichkeit in der Zusammensetzung der resultierenden Polymerisatteilchen führen kann.

Die Herstellung wäßriger Primärdispersionen mit Hilfe der radikalischen Miniemulsionspolymerisation ist beispielsweise aus der internationalen Patentanmeldung WO 98/02466 oder den deutschen Patentschriften DE-A-196 28 143 und DE-A-196 28 142 bekannt. Bei diesen bekannten Verfahren können die Monomeren in der Gegenwart unterschiedlicher niedermolekularer, oligomerer oder polymerer hydrophober Substanzen copolymerisiert werden. Außerdem können hydrophobe, in Wasser wenig lösliche organische Hilfsmittel wie Weichmacher, Verbesserer der Klebrigkeit der resultierenden Verfilmung, Filmbildehilfsmittel oder sonstige nicht näher spezifizierte organische Additive in die Monomertröpfchen der Miniemulsion eingearbeitet werden. Die Verwendung von Diphenylethylen als Comonomer und von hydrophoben Vernetzungsmitteln für die aus den Monomeren gebildeten Copolymerisate geht aus den oben genannten Patentschriften ebensowenig hervor wie die Verwendung der bekannten wäßrige Primärdispersionen für die Herstellung von Beschichtungsstoffen. Zwar lösen die bekannten Verfahren in gewissem Umfang das Problem der Exothermie der radikalischen Polymerisation und Copolymerisation, indes ist hierfür ein erhöhter meß- und regeltechnischer Aufwand zu betreiben.

Wäßrige Beschichtungsstoffe auf der Basis von wäßrigen Primärdispersionen, die feste Kern-Schale-Partikel enthalten und durch Miniemulsionspolymerisation von Monomeren in der Gegenwart hydrophober Polymere hergestellt worden sind, sind aus den Patentschriften EP-A-0 401 565, WO 97/49739 oder EP-A-0 755 946 bekannt. Die Verwendung von Diphenylethylen als Comonomer und die Copolymerisation in der Gegenwart von hydrophoben Vernetzungsmitteln für die aus den Monomeren gebildeten Copolymerisate gehen aus diesen Patentschriften nicht hervor. Obwohl die bekannten Beschichtungsstoffe bereits zahlreiche vorteilhafte Eigenschaften aufweisen, treten noch immer Probleme auf, die mit einer unzureichenden Verteilung der Vernetzungsmittel in den wäßrigen Dispersionen verbunden sind. Dies führt insbesondere dazu, daß eine größere Menge an Vernetzungsmitteln verwendet werden muß, als theoretisch notwendig wäre. Unumgesetzte Vernetzungsmittel können dann u. U. die anwendungstechnischen Eigenschaften der aus den Beschichtungsstoffen hergestellten Beschichtungen schädigen.

Die Mikroverkapselung hydrophober organischer Lösemittel oder von Zielmaterialien wie Bioziden und Herbiziden in wasserunlöslichen Kern-Schale-Partikeln, hergestellt durch Miniemulsionspolymerisation, ist aus den Patentschriften EP-A-0 203 724 oder US-A-4,677,003 bekannt Die Copolymerisation wird jedoch nicht in der Gegenwart von hydrophoben Vernetzungsmitteln für die aus den Monomeren gebildeten Copolymerisate durchgeführt. Ebensowenig wird die Verwendung von Diphenylethylen als Comonomer beschrieben.

Aus den Patentschriften EP-A-0 622 389 oder DE-A-43 14 297 ist die Copolymerisation von Monomeren in der Gegenwart von blockierten Polyisocyanaten und von Epoxidharzen bekannt Es wird indes nicht die Technik der Miniemulsionspolymerisation angewandt. Ein vergleichbares Verfahren, bei dem die Vernetzungsmittel jedoch nicht näher spezifiziert werden, geht aus den Patentschriften EP-A-0 758 347 oder WO 95/29944 hervor. Die entsprechenden bekannten Copolymerisate bzw. ihre Primärdispersionen werden zur Herstellung von Beschichtungsstoffen verwendet. Die bekannten Beschichtungsstoffe weisen ebenfalls die Probleme auf, die mit einer nicht ausreichend feinen Verteilung der Vernetzungsmittel in den Beschichtungsstoffen verbunden sind.

Die für die Herstellung von Acrylatcopolymerisaten angewandte radikalische Polymerisation ist häufig sehr exotherm und schwer zu regeln. Für die Reaktionsführung bedeutet dies, daß hohe Konzentrationen an Monomeren und/oder die sogenannte batch-Fahrweise, bei der die gesamte Menge der Monomeren in einem wäßrigen Medium vorgelegt, emulgiert und anschließend auspolymerisiert wird, vermieden werden müssen. Auch die gezielte Einstellung definierter Molekulargewichte, Molekulargewichtsverteilungen und anderer Eigenschaften bereitet häufig Schwierigkeiten. Die gezielte Einstellung eines bestimmten Eigenschaftsprofils von Acrylatcopolymerisaten ist aber für ihre Verwendung als Bindemittel in Beschichtungsstoffen, insbesondere wäßrigen Beschichtungsstoffen, von großer Bedeutung, da hierdurch das anwendungstechnische Eigenschaftsprofil der Beschichtungsstoffe direkt beeinflußt werden kann.

Es hat dahernicht an Versuchen gefehlt, die radikalische Copolymerisation olefinisch ungesättigter Monomerer gezielt zu regeln.

So beschreibt die internationale Patentanmeldung WO 98/01478 ein Verfahren, bei dem die Copolymerisation in Gegenwart eines radikalischen Starters und einer Thiocarbonylthio-Verbindung als Kettenübertragungsmittel durchgeführt wird.

Die internationale Patentanmeldung WO 92/13903 beschreibt ein Verfahren zur Herstellung von Copolymerisaten mit einem niedrigen Molekulargewicht durch Radikalkettenpolymerisation in Gegenwart eines Gruppenübertragungsmittels, das eine Kohlenstoff Schwefel-Doppelbindung aufweist. Diese Verbindungen wirken nicht nur als Kettenübertragungsmittel, sondern auch als Wachstumsregler, so daß nur Copolymerisate mit niedrigem Molekulargewicht resultieren.

Aus der internationalen Patentanmeldung WO 96/15157 geht ein Verfahren zur Herstellung von Copolymerisaten mit vergleichsweise enger Molekulargewichtsverteilung hervor, bei dem ein Monomer mit einem Vinylterminierten Makromonomeren in Anwesenheit eines radikalischen Initiators umgesetzt wird.

Außerdem geht aus der internationalen Patentanmeldung WO 98/37104 die Herstellung von Acrylatcopolymerisaten mit definierten Molekulargewichten durch radikalische Polymerisation in Gegenwart eines Kettenübertragungsmittels mit einer C-C-Doppelbindung und mit Resten, die diese Doppelbindung bezüglich der radikalischen Anlagerung von Monomeren aktivieren, hervor.

Trotz bedeutsamer Fortschritte auf diesem Gebiet fehlt es noch immer an einem universell einsetzbaren Verfahren zur kontrollierten radikalischen Polymerisation, das in einfacher Weise chemisch strukturierte Polymerisate, insbesondere Acrylatcopolymerisate, liefert und mit dessen Hilfe das Eigenschaftsprofil der Polymerisate im Hinblick auf ihre Anwendung in Beschichtungsstoffen, insbesondere wäßrigen Beschichtungsstoffen, die der Herstellung Klarlackierungen und von farb- und/oder effektgebenden Mehrschichtlackierungen dienen, gezielt eingestellt werden kann.

Aufgabe der vorliegenden Erfindung ist es, wäßrige Primärdispersionen und Beschichtungsstoffe, enthaltend dispergierte und/oder emulgierte, feste und/oder flüssige Polymerpartikel und/oder dispergierte feste Kern-Schale Partikel eines Teilchendurchmessers ≤500 nm, zu finden, die die Nachteile des Standes der Technik nicht mehr länger aufweisen, sondern die sich in einfacher Weise kontrolliert herstellen lassen. Die Copolymerisate, die in den wäßrigen Primärdispersionen und Beschichtungsstoffen enthalten sind, sollen definierte Molekulargewichte aufweisen und sich auch nach der batch-Fahrweise herstellen lassen, ohne daß hierbei die Probleme auftreten, die mit der hohen Exothermie der radikalischen Polymerisation verbunden sind, wie die thermische Schädigung der Produkte bis hin zum Durchgehen des Reaktors. Darüber hinaus sollen die wäßrigen Primärdispersionen und Beschichtungsstoffe möglichst fein verteilte Vernetzungsmittel enthalten.

Des weiteren war es die Aufgabe der vorliegenden Erfindung, ein Verfahren zur Herstellung von wäßrigen Primärdispersionen und Beschichtungsstoffen durch radikalische Mikro- oder Miniemulsionpolymerisation zu finden, das die Nachteile des Standes der Technik nicht mehr länger aufweist, sondern auch in der batch-Fahrweise durchgeführt werden kann, ohne daß die vorstehend geschilderten Problem auftreten, und es gestattet, das Eigenschaftsprofil der resultierenden Copolymerisate, insbesondere hinsichtlich des Molekulargewichts und der Molekulargewichtsverteilung gezielt einzustellen.

Demgemäß wurden die wäßrigen Primärdispersionen und Beschichtungsstoffe, enthaltend dispergierte und/oder emulgierte, feste und/oder flüssige Polymerpartikel und/oder dispergierte feste Kern-Schale-Partikel eines Teilchendurchmesser ≤ 500 nm, gefunden, die durch kontrollierte radikalische Mikro- oder Miniemulsionspolymerisation von.
A) mindestens einem olefinisch ungesättigten Monomer und
B) mindestens einem vom olefinisch ungesättigten Monomer (A) verschiedenen olefinisch ungesättigten Monomer der allgemeinen Formel I

   **R**^{**1**}**R**^{**2**}**C=CR**^{**3**}**R**^{**4**} **(I),**

   worin die Reste R¹, R² , R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-Arylalkyl- oder Arylcycloalkylreste stehen, mit der Maßgabe, daß mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen;
   in der Gegenwart von zumindest
C) mindestens einem hydrophoben Vernetzungsmittel für das aus den Ausgangsprodukten (A) und (B) resultierende Copolymerisat
   herstellbar sind und die im folgenden der Kürze halber als "erfindungsgemäße Primärdispersionen bzw. Beschichtungsstoffe" bezeichnet werden.

Außerdem wurde das Verfahren zur Herstellung wäßriger Primärdispersionen und Beschichtungsstoffe, enthaltend dispergierte und/oder emulgierte, feste und/oder flüssige Polymerpartikel und/oder dispergierte feste Kern-Schale-Partikel eines Teilchendurchmesser ≤ 500 nm, durch kontrollierte radikalische Mikro- oder Miniemulsionspolymerisation von
A) mindestens einem olefinisch ungesättigten Monomer und
B) mindestens einem vom olefinisch ungesättigten Monomer (A) verschiedenen olefinisch ungesättigten Monomer der allgemeinen Formel I

   **R**^{**1**}**R**^{**2**}**C=CR**^{**3**}**R**^{**4**} **(I),**

   worin die Reste R¹, R², R³ und R⁴ jeweils unabhängig voneinander für Wasserstoffatome oder substituierte oder unsubstittuierte Alkyl-, Cycloalkyl-, Alkylcycloalkyl-, Cycloalkylalkyl-, Aryl-, Alkylaryl-, Cycloalkylaryl-Arylalkyl- oder Arylcycloalkylreste stehen, mit der Maßgabe, daß mindestens zwei der Variablen R¹, R² , R³ und R⁴ für substituierte oder unsubstituierte Aryl-, Arylalkyl- oder Arylcycloalkylreste, insbesondere substituierte oder unsubstitueirte Arylreste, stehen;
   in der Gegenwart von zumindest
C) mindestens einem hydrophoben Vemetzungsmittel für das aus den Ausgangsprodukten (A) und (B) resultierende Copolymerisat
gefunden, das im folgenden der Kürze halber als "erfindungsgemäßes Verfahren" bezeichnet wird.

Weitere erfindungsgemäße Gegenstände gehen aus der nachfolgenden Beschreibung hervor.

Im Hinblick auf den Stand der Technik war es überraschend und für den Fachmann nicht vorhersehbar, daß die Aufgabe, die der vorliegenden Erfindung zugrunde lag, durch die erfindungsgemäßen Primärdispersionen und die erfindungsgemäßen Beschichtungsstoffe sowie das erfindungsgemäße Verfahren gelöst werden konnte. Insbesondere war es überraschend, daß die in den erfindungsgemäßen Primärdispersionen enthaltenen Copolymerisate Eigenschaften aufwiesen, die sie für die Verwendung in Beschichtungsstoffen in hohem Maße geeignet machen. Außerdem war es überraschend, daß die erfindungsgemäßen Primärdispersionen direkt als Beschichtungsstoffe verwendet werden können, wobei sie sogar weniger Vernetzungsmittel als herkömmliche Beschichtungsstoffe benötigen. Nicht zuletzt war es überraschend, daß das erfindungsgemäße Verfahren die erfindungsgemäßen Primärdispersionen und Beschichtungsstoffe in besonders einfacher Weise gezielt liefert, ohne daß hierbei die vorstehend beschriebenen, vom Stand der Technik her bekannten Probleme auftreten.

Im Rahmen der vorliegenden Erfindung ist unter der Eigenschaft hydrophil die konstitutionelle Eigenschaft eines Moleküls oder einer funktionellen Gruppe zu verstehen, in die wäßrige Phase einzudringen oder darin zu verbleiben. Demgemäß ist im Rahmen der vorliegenden Erfindung unter der Eigenschaft hydrophob die konstitutionelle Eigenschaft eines Moleküls oder einer funktionellen Gruppe zu verstehen, sich gegenüber Wasser exophil zu verhalten, d. h., sie zeigen die Tendenz, in Wasser nicht einzudringen oder die wäßrige Phase zu verlassen. Ergänzend wird auf Römpp Lexikon Lacke und Druckfarben, Georg Thieme Verlag, Stuttgart, New York, 1998, »Hydrophilie«, »Hydrophobie«, Seiten 294 und 295, verwiesen.

Erfindungsgemäß . enthalten die Primärdispersionen und Beschichtungsstoffe dispergierte und/oder emulgierte feste und/oder flüssige Polymerpartikel und/oder dispergierte feste Kern-Schale-Partikel. Die Größe der Polymerpartikel oder der dispergierten Kern-Schale-Partikel ergibt sich direkt aus dem nachfolgend beschriebenen erfindungsgemäßen Verfahren. Hierbei liegt der mittlere Teilchendurchmesser unter 500 nm. Vorzugsweise liegt er bei 10 bis 500 nm, bevorzugt 50 bis 400 nm und ganz besonders bevorzugt 100 bis 350 nm. Die erfindungsgemäßen Primärdispersionen und Beschichtungsstoffe weisen einen vorteilhaft hohen Feststoffgehalt, beispielsweise von über 20 Gew.-%, bevorzugt über 30 Gew.-%, auf. Es können sogar Feststoffgehalte von über 40 Gew.-% erzielt werden. Die erfindungsgemäßen Primärdispersionen und Beschichtungsstoffe haben eine geringe Viskosität, auch bei hohem Feststoffgehalt.

Die erfindungsgemäß zu verwendenden Kern-Schale-Partikel resultieren aus der Pfropfmischpolymerisation organischer Feststoffe und der nachstehend beschriebenen erfindungsgemäß zu verwendenden Comonomeren (A) und (B). Vorzugsweise handelt es sich bei den organischen Feststoffen um hydrophobe Polymere, wie sie beispielsweise in den Patentschriften EP-A-0 401 565, Seite 3, Zeilen 5, bis Seite 4, Zeile 50, WO 97/49739, Seite 4, Zeilen 19, bis Seite 5, Zeile 3, oder EP-A-0 755 946, Seite 3, Zeile 26, bis Seite 5,Zeile 38, beschrieben werden. Diese hydrophoben Polymere können auch nach dem erfindungsgemäßen Verfahren hergestellt werden.

Die erfindungsgemäßen Primärdispersionen und Beschichtungsstoffe können auch eine bimodale Teilchengrößenverteilung aufweisen, bei der 0,1 bis 80 Gew.-%, insbesondere 1,0 bis 50 Gew.-%, des aus dem Comonomeren (A) und (B) resultierenden Copolymerisats eine Teilchengröße, bestimmt mit einer analytischen Ultrazentrifuge, von 20 bis 500 nm, insbesondere 50 bis 300 nm haben, und 20 bis 99,9 Gew.-%, insbesondere 50 bis 99 Gew.-% des Copolymerisats, eine Teilchengröße von 200 bis 1.500 nm, insbesondere 300 bis 900 nm haben, wobei sich die Teilchengrößen um mindestens 50 nm, insbesondere um mindestens 100 nm, ganz besonders bevorzugt um mindestens 200 nm unterscheiden. Hinsichtlich der Meßmethode wird ergänzend auf die Zeilen 5 bis 9, der Seite 6 der deutschen Patentanmeldung DE-A-196 28 142 verwiesen.

Die erste erfindungswesentliche Ausgangsverbindung für die erfindungsgemäßen Primärdispersionen oder Beschichtungsstoffe bzw. für das erfindungsgemäße Verfahren ist mindestens ein olefinisch ungesättigtes Monomer (A).

Vorzugsweise wird hierbei mindestens ein Monomer (A) verwendet, das reaktive funktionelle Gruppen enthält, die mit den komplementären reaktiven funktionellen Gruppen der Vernetzungsmittel (C) Vernetzungsreaktionen eingehen können. Beispiele geeigneter erfindungsgemäß zu verwendender komplementärer reaktiver funktioneller Gruppen sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest; die Variablen R' und R" stehen für gleiche oder verschiedene aliphatische Reste oder sind miteinander zu einem aliphatischen oder heteroaliphatischen Ring verknüpft

### Übersicht: Beispiele komplementärer funktioneller Gruppen

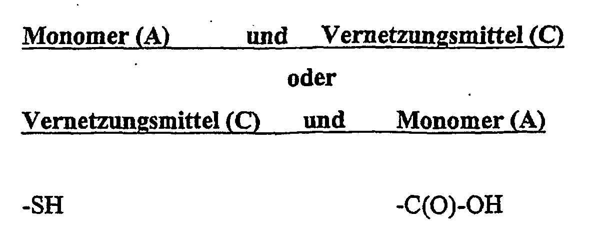

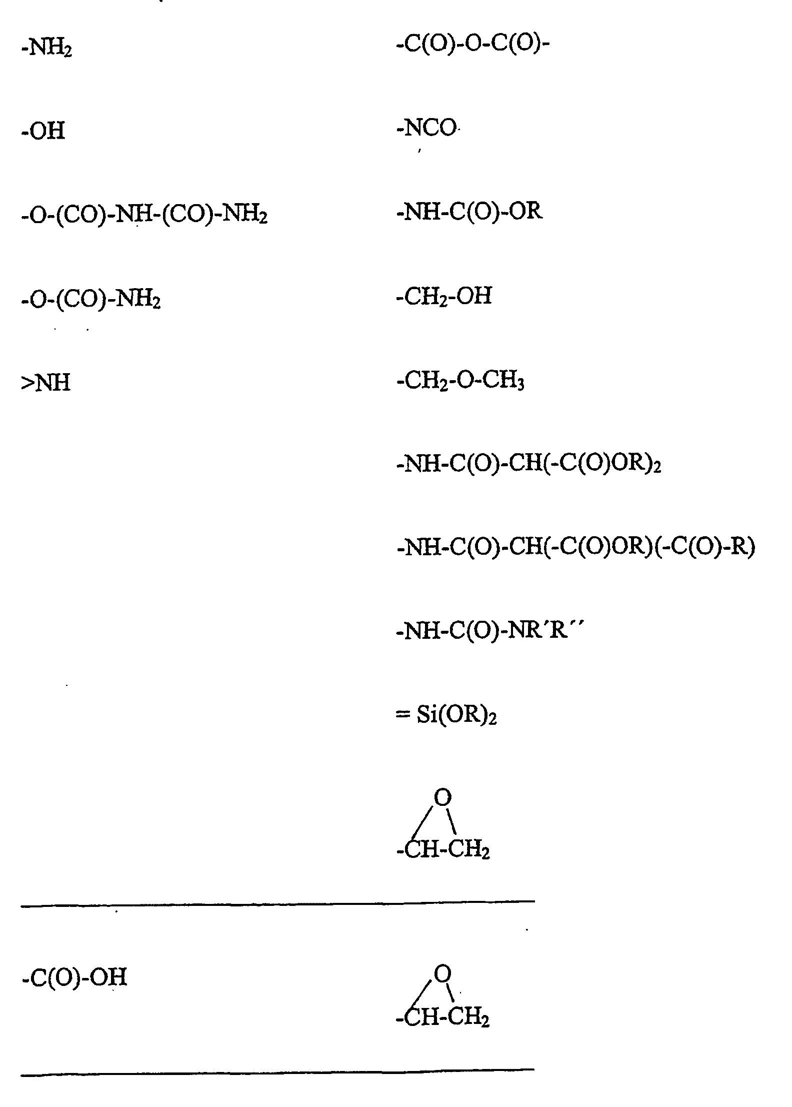

Die Auswahl der jeweiligen komplementären Gruppen richtet sich zum einen danach, daß sie bei der Lagerung erfindungsgemäßen Primärdispersionen oder Beschichtungsstoffe keine unerwünschten Reaktionen eingehen und/oder gegebenenfalls die Härtung mit aktinischer Strahlung nicht stören oder inhibieren dürfen, und zum anderen danach, in welchem Temperaturbereich die Vernetzung stattfinden soll.

Vorzugsweise werden bei den erfindungsgemäßen Beschichtungsstoffen Vernetzungstemperaturen von 100 °C bis 180 °C angewandt. Es werden daher vorzugsweise Monomere (A) mit Thio-, Hydroxyl-, Alkoxymethylamino-, Imino-, Carbamat-, Allophanat- und/oder Carboxygruppen, insbesondere aber Amino-, Alkoxymethylamino- oder Hydroxylgruppen, speziell Hydroxylgruppen, einerseits und Vernetzungsmittel (C) mit Anhydrid-, Carboxy-, Epoxy-, blockierten Isocyanat-, Urethan-, Methylol-, Methylolether-, Siloxan-, Amino-, Hydroxy- und/oder beta-Hydroxyalkylamidgruppen, insbesondere aber blockierten Isocyanat-, Urethan- oder Methylolethergruppen, andererseits angewandt.

Beispiele geeigneter Monomere (A) sind
a1) im wesentlichen säuregruppenfreien (Meth)acrylsäureester wie (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder methacrylat; cycloaliphatische (Meth)acrylsäureester, insbesondere Cyclohexyl-, Isobomyl-, Dicyclopentadienyl-, Octahydro-4,7-methano-1H-inden-methanol- oder tert.-Butylcyclohexyl(meth)acrylat; (Meth)Acrylsäureoxaalkylester oder -oxacycloalkylester wie Ethyltriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)acrylsäurederivate. Diese können in untergeordneten Mengen höherfunktionelle (Meth)Acrylsäurealkyl- oder -cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder -1,4-diol-di(meth)acrylat; Trimethylolpropan-di- oder -tri(meth)acrylat; oder Pentaerythrit-di-, -tri- oder -tetra(meth)acrylat enthalten. Im Rahmen der vorliegenden Erfindung sind hierbei unter untergeordneten Mengen an höherfunktionellen Monomeren solche Mengen zu verstehen, welche nicht zur Vernetzung oder Gelierung der Copolymerisate (A) führen.
a2) Monomere, welche mindestens eine Hydroxylgruppe, Aminogruppe, Alkoxymethylaminogruppe oder Iminogruppe pro Molekül tragen und im wesentlichen säuregruppenfrei sind, wie Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, -fumarat oder -itaconat; oder Hydroxycycloalkylester wie 1,4-Bis(hydroxymethyl)cyclohexan-, Octahydro-4,7-methano-1H-indendimethanol- oder Methylpropandiolmonoacrylat, -monomethacrylat, monoethacrylat, -monocrotonat, -monomaleinat, -monofumarat oder -monoitaconat; oder Umsetzungsprodukte aus cyclischen Estern, wie z.B: epsilon-Caprolacton und diesen Hydroxyalkyl- oder -cycloalkylestern; oder olefinisch ungesättigte Alkohole wie Allylalkohol oder Polyole wie Trimethylolpropanmono- oder diallylether oder Pentaerythritmono-, -di- oder -triallylether (hinsichtlich dieser höherfunktionellen Monomeren (a2) gilt das für die höherfunktionellen Monomeren (a1) Gesagte sinngemäß); N,N-Dimethylaminoethylacrylat, N,N-Diethylaminoethylmethacrylat, Allylamin oder N-Methyliminoethylacrylat oder N,N-Di(methoxymethyl)aminoethylacrylat und -methacrylat oder N,N-Di(butoxymethyl)aminopropylacrylat und -methacrylat;
a3) Monomere, welche mindestens eine Säuregruppe, die in die entsprechende Säureaniongruppe überführbar ist, pro Molekül tragen, wie Acrylsäure, Methacrylsäure, Ethacrylsäure, Crotonsäure, Maleinsäure, Fumarsäure oder Itaconsäure; olefinisch ungesättigte Sulfon- oder Phosphonsäuren oder deren Teilester, oder Maleinsäuremono(meth)acryloyloxyethylester, Bernsteinsäuremono(meth)acryloyloxyethylester oder Phthalsäuremono(meth)acryloyloxyethylester. Im Rahmen der vorliegenden Erfindung werden die Monomeren (a3) nicht als die alleinigen Monomeren (A) verwendet, sondern stets in Verbindung mit anderen Monomeren (A) und dies auch nur in solch geringen Mengen, daß die Monomeren (a3) nicht außerhalb der Tröpfchen der Miniemulsion polymerisieren.
a4) Vinylester von in alpha-Stellung verzweigten Monocarbonsäuren mit 5 bis 18 Kohlenstoffatomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester (a4) können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, insbesondere aber Versatic®-Säuren, eingesetzt
a5) Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird.
a6) Cyclische und/oder acyclische Olefine wie Ethylen, Propylen, But- 1-en, Pent-1-en, Hex-1-en, Cyclohexen, Cyclopenten, Norbonen, Butadien, Isopren, Cylopentadien und/oder Dicyclopentadien.
a7) (Meth)Acrylsäureamide wie (Meth)Acrylsäüreamid, N-Methyl-, N,N-Dimethyl-, N-Ethyl-, N,N-Diethyl-, N-Propyl-, N,N-Dipropyl-, N-Butyl-, N,N-Dibutyl-, N-Cyclohexyl-, N,N-Cyclohexyl-methyl- und/oder N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid;
a8) Epoxidgruppen enthaltende Monomere wie der Glycidylester der Acrylsäure, Methacrylsäure, Ethacrylsäure, Crotonsäure, Maleinsäure, Fumarsäure und/oder Itaconsäure.
a9) Vinylaromatische Kohlenwasserstoffe wie Styrol, alpha-Alkylstyrole, insbesondere alpha-Methylstyrol, und/oder Vinyltoluol; Vinylbenzoesäure (alle Isomere), N,N-Diethylaminostyrol (alle Isomere), alpha-Methylvinylbenzoesäure (alle Isomere); N,N-Diethylamino-alpha-methylstyrol (alle Isomere) und/oder p-Vinylbenzsolsulfonsäure.
a10) Nitrile wie Acrylnitril und/oder Methacrylnitril.
a11) Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam, 1-Vinylimidazol oder N-Vinylpyrrolidon; Vinylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure.
a12) Allylverbindungen, insbesondere Allylether und -ester wie Allylmethyl-, -ethyl-, -propyl- oder -butylether oder Allylacetat, -propionat oder-butyrat.
a13) Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE-A-38 07 571 auf den Seiten 5 bis 7, der DE-A 37 06 095 in den Spalten 3 bis 7, der EP-B-0 358 153 auf den Seiten 3 bis 6, in der US-A 4,754,014 in den Spalten 5 bis 9, in der DE-A 44 21 823 oder in der internationalen Patentanmeldung WO 92/22615 auf Seite 12, Zeile 18, bis Seite 18, Zeile 10, beschrieben sind.
   und/oder
a14) Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder -cycloalkylestern der (Meth)Acrylsäure (vgl. Monomere a2).

Jedes der vorstehend genannten Monomeren (a1) bis (a14) , ausgenommen das Monomer (a3), kann für sich alleine mit dem Monomeren (B) polymerisiert werden. Erfindungsgemäß ist es indes von Vorteil, mindestens zwei Monomere (A) zu verwenden, weil hierdurch das Eigenschaftsprofil der resultierenden Copolymerisate in besonders vorteilhafter Weise sehr breit variiert und dem jeweiligen Verwendungszweck der erfindungsgemäßen Primärdispersionen oder der erfindungsgemäßen Beschichtungsstoffe ganz gezielt angepaßt werden kann.

Weitere Beispiele geeigneter Monomere (A) gehen aus der deutschen Patentanmeldung DE-A-196 28 142, Seite 2, Zeile 50, bis Seite 3, Zeile 7, hervor.

Vorzugsweise werden die Monomeren (A) so ausgewählt, daß (Meth)Acrylatcopolymerisate resultieren, deren Eigenschaftsprofil in erster Linie von den vorstehend beschriebenen (Meth)Acrylaten bestimmt wird. Als Comonomer (A) werden dann bevorzugt vinylaromatische Kohlenwasserstoffe (a9), insbesondere Styrol, verwendet.

Das zweite erfindungswesentliche Ausgangsprodukte für die Herstellung der erfindungsgemäßen Primärdispersionen und Beschichtungsstoffe und für das erfindungsgemäße Verfahren ist mindestens ein olefinisch ungesättigtes Monomer (B), das von den vorstehend beschriebenen Monomeren (A) verschieden ist

Das erfindungsgemäß zu verwendende olefinisch ungesättigte Monomer (B) hat die allgemeine Formel I

In der allgemeinen Formel I stehen die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-Arylalkyl- oder Arylcycloalkylreste, mit der Maßgabe, daß mindestens zwei der Variablen R¹, R² , R³ und R⁴ für substituierte oder unsubstituierte Aryl-, Arylalkyl- oder Arylcycloallcylreste, insbesondere substituierte oder unsubstituierte Arylreste, stehen.

Beispiele geeigneter Alkylreste sind Methyl, Ethyl, Propyl, Isopropyl, n-Butyl, iso-Butyl, tert.-Butyl, Amyl, Hexyl oder 2-Ethylhexyl.

Beispiele geeigneter Cycloalkylreste sind Cyclobutyl, Cyclopentyl oder Cyclohexyl.

Beispiele geeigneter Alkylcycloalkylreste sind Methylencyclohexan, Ethylencyclohexan oder Propan-1,3-diyl-cyclohexan.

Beispiele geeigneter Cycloallcylalkykeste sind 2-, 3- oder 4-Methyl-, -Ethyl-, -Propyl- oder -Butylcyclohex-1-yl.

Beispiele geeigneter Arylreste sind Phenyl, Naphthyl oder Biphenylyl, vorzugsweise Phenyl und Naphthyl und insbesondere Phenyl.

Beispiele geeigneter Alkylarykeste sind Benzyl oder Ethylen- oder Propan-1,3-diylbenzol.

Beispiele geeigneter Cycloalkylarylreste sind 2-, 3-, oder 4-Phenylcyclohex-1-yl.

Beispiele geeigneter Arylalkylreste sind 2-, 3- oder 4-Methyl-, -Ethyl-, -Propyl- oder -Butylphen-1-yl.

Beispiele geeigneter Arylcycloalkylreste sind 2-, 3- oder 4-Cyclohexylphen-1-yl.

Die vorstehend beschriebenen Reste R¹, R² , R³ und R⁴ können substituiert sein. Hierzu können elektronenziehende oder elektronenschiebende Atome oder organische Reste verwendet werden.

Beispiele geeigneter Substitutienten sind Halogenatome, insbesondere Chlor und Fluor, Nitrilgruppen, Nitrogruppen, partiell oder vollständig halogenierte, insbesondere chlorierte und/oder fluorierte, Alkyl-, Cycloalkyl-, Alkylcycloalkyl-, Cycloalkylalkyl-, Aryl-, Alkylaryl-, Cycloalkylaryl- Arylalkyl- und Arylcycloalkylreste, inclusive der vorstehend beispielhaft genannten, insbesondere tert.-Butyl; Aryloxy-, Alkyloxy- und Cycloalkyloxyreste, insbesondere Phenoxy, Naphthoxy, Methoxy, Ethoxy, Propoxy, Butyloxy oder Cyclohexyloxy; Arylthio-, Alkylthio- und Cycloalkylthioreste, insbesondere Phenylthio, Naphthylthio, Methylthio, Ethylthio, Propylthio, Butylthio oder Cyclohexylthio; Hydroxylgruppen; und/oder primäre, sekundäre und/oder tertiäre Aminogruppen, insbesondere Amino, N-Methylamino, N-Ethylamino, N-Propylamino, N-Phenylamino, N-Cyclohexylamino, N,N-Dimethylamino, N,N-Diethylamino, N,N-Dipropylamino, N,N-Diphenylamino, N,N-Dicyclohexylamino, N-Cyclohexyl-N-methylamino oder N-Ethyl-N-methylamino.

Beispiele für erfindungsgemäß besonders bevorzugt verwendete Monomere (B) sind Diphenylethylen, Dinaphthalinethylen, cis- oder trans- Stilben, Vinyliden-bis(4-N,N-dimethylaminobenzol), Vinyliden-bis(4-aminöbenzol) oder Vinyliden-bis(4-nitrobenzol).

Erfindungsgemäß können die Monomeren (B) einzeln oder als Gemisch aus mindestens zwei Monomeren (B) verwendet werden.

Vorzugsweise liegt der Anteil der Monomeren (B) an dem Monomerengemisch (A) und (B), jeweils bezogen auf das Gemisch, bei 0,01 bis 10, bevorzugt bei 0, 1 bis 9,0, besonders bevorzugt bei 0,15 bis 8,0, ganz besonders bevorzugt 0,2 bis 7,0 und insbesondere 0, 25 bis 6,0 Gew.-%.

Hinsichtlich der Reaktionsführung und der Eigenschaften der resultierenden Copolymerisate, insbesondere der Acrylatcopolymerisate, ist Diphenylethylen von ganz besonderem Vorteil und wird deshalb erfindungsgemäß ganz besonders bevorzugt verwendet.

Die erfindungsgemäß zu verwendenden Monomere (A) und (B) werden in Gegenwart mindestens eines wasser- und/oder öllöslichen, Radikale bildenden Initiators miteinander zu Copolymerisaten umgesetzt. Als Beispiele für einsetzbare Initiatoren werden genannt: Dialkylperoxide, wie Di-tert-Butylperoxid oder Dicumylperoxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethyl- hexanoat oder tert.-Butylper-2-ethylhexanoat; Peroxodicarbonate; Kalium-, Natrium- oder Ammoniumsperoxodisulfat; Azoinitiatoren, beispielsweise Azodinitrile wie Azobisisobutyronitril; C-C-spaltende Initiatoren wie Benzpinakolsilylether, oder eine Kombination eines nicht oxidierenden Initiators mit Wasserstoffperoxid. Weitere Beispiele geeigneter Initiatoren werden in der deutschen Patentanmeldung DE-A-196 28 142, Seite 3, Zeile 49, bis Seite 4, Zeile 6, beschrieben. Es können auch Kombinationen dieser Initiatoren eingesetzt werden.

Vorzugsweise werden vergleichsweise große Mengen an radikalischem Initiator zugegeben, wobei der Anteil des Initiators am Reaktionsgemisch, jeweils bezogen auf die Gesamtmenge der Monomeren (A) und des Initiators, besonders bevorzugt 0,2 bis 20 Gew.-%, ganz besonders bevorzugt 0,5 bis 15 Gew.-% und insbesondere 1,0 bis 10 Gew.-% beträgt.

Vorzugsweise beträgt das Gewichtsverhältnis von Initiator zu den Monomeren (B) 5 : 1 bis 1 : 20.

Erfindungsgemäß werden die Monomeren (A) und (B) in der Gegenwart mindestens eines hydrophoben Vernetzungsmittels copolymerisiert. Vorzugsweise enthalten die hydrophoben Vernetzungsmittel die vorstehend beschriebenen reaktiven funktionellen Gruppen, die mit den in den resultierenden Copolymerisaten vorhandenen komplementären reaktiven funktionellen Gruppen Vernetzungsreaktionen eingehen.

Beispiele besonders gut geeigneter Vernetzungsmittel (C) sind blockierte Polyisocyanate, Tris(alkoxycarbonylamino)triazine oder vollständig veretherte Aminoplastharze.

Beispiele geeigneter Blockierungsmittel für die Herstellung der blockierten Polyisocyanate (C) sind die aus der US-Patentschrift US-A-4,444,954 bekannten Blockierungsmittel:
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydröxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, insbesondere Dimethylpyrazol, oder Triazole; sowie
xvii) Gemische dieser Blockierungsmittel, insbesondere Dimethylpyrazol und Triazole, Malonester und Acetessigsäureester oder Dimethylpyrazol und Succinimid.

Beispiele geeigneter zu blockierender organischer Polyisocyanate sind insbesondere die sogenannten Lackpolyisocyanate mit aliphatisch, cycloaliphatisch, araliphatisch und/oder aromatisch gebundenen Isocyanatgruppen. Bevorzugt werden Polyisocyanate mit 2 bis 5 Isocyanatgruppen pro Molekül und mit Viskositäten von 100 bis 10.000, vorzugsweise 100 bis 5000.

Weitere Beispiele für geeignete zu blockierende Polyisocyanate sind in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben. Beispielsweise geeignet sind die isocyanatgruppenhaltigen Polyurethanpräpolymere, die durch Reaktion von Polyolen mit einem Überschuß an Polyisocyanaten hergestellt werden können und die bevorzugt niederviskos sind.

Weitere Beispiele geeigneter zu blockierender Polyisocyanate sind Isocyanurat-, Biuret-, Allophanat-, Iminooxadiazindion-, Urethan-, Harnstoff und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, Dicyclohexylmethan-2,4'-diisocyanat, Dicyclohexylmethan-4,4'-diisocyanat, Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden insbesondere 2-Heptyl-3,4-bis(9-isocyanatononyl)-1-pentylcyclohexan; oder 1,2-,1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan, 1,8-Diisocyanato-4-isocyanatomethyl-octan, 1,7-Diisocyanato-4-isocyanatomethyl-heptan oder 1-Isocyanato-2-(3-isocyanatopropyl)cyclohexan oder Mischungen aus diesen Polyisocyanaten eingesetzt.

Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt.

Beispiele für besonders gut geeignete Aminoplastharze (C) sind Melaminharze, Guanaminharze oder Harnstoffharze. Hierbei kann jedes für Klarlacke geeignete Aminoplastharz oder eine Mischung aus solchen Aminoplastharzen verwendet werden. Ergänzend wird auf Römpp Lexikon Lacke und Druckfarben, Georg Thieme Verlag, 1998, Seite 29, »Aminoharze«, und das Lehrbuch "Lackadditive" von Johan Bieleman, Wiley-VCH, Weinheim, New York, 1998, Seiten 242 ff., oder auf das Buch "Paints, Coatings and Solvents", second completely revised edition, Edit. D. Stoye und W. Freitag, Wiley-VCH, Weinheim, New York, 1998, Seiten 80 ff., verwiesen. Des weiteren kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Die besonders gut geeigneten Tris(alkoxycarbonylamino)triazine wiesen die folgende Formel auf:

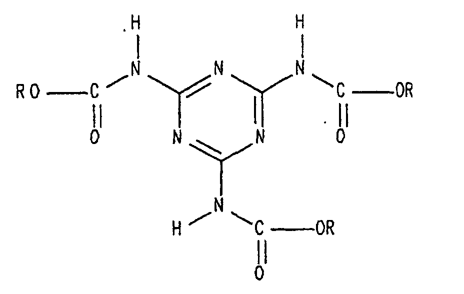

Beispiele für besonders gut geeignete Tris(alkoxycarbonylamino)triazine werden in den Patentschriften US-A-4,939,213, US-A-5,084,541 oder der EP-A-0 624 577 beschrieben. Insbesondere werden die Tris(methoxy-, Tris(butoxy- und/oder Tris(2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Von den vorstehend beschriebenen Vernetzungsmitteln (C) bieten die blockierten Polyisocyanate besondere Vorteile und werden deshalb erfindungsgemäß ganz besonders bevorzugt verwendet

Bei dem erfindungsgemäßen Verfahren kann das Verhältnis der Monomeren (A), die komplementäre reaktive funktionelle Gruppen enthalten, zu den Vemetzungsmittel (C) sehr breit variieren. Erfindungsgemäß ist es von Vorteil, wenn das Molverhältnis von komplementären reaktiven funktionellen Gruppen in (A) zu komplementären reaktiven funktionellen Gruppen in (C) bei 5,0 : 1,0 bis 1,0 : 5,0, bevorzugt 4,0 : 1,0 bis 1,0 : 4,0, besonders bevorzugt 3,0 : 1,0 bis 1,0 : 3,0 und insbesondere 2,0 : 1 bis 1 : 2,0 liegt. Besondere Vorteile resultieren, wenn das Molverhältnis bei etwa oder genau 1,0 : 1,0 liegt.

Neben den vorstehend beschriebenen erfindungsgemäß zu verwendenden hydrophoben Vernetzungsmitteln (C) können bei der Copolymerisation der erfindungsgemäß zu verwendenden Monomeren (A) und (B) auch noch von (C) verschiedene hydrophobe Verbindungen (D) zugegen sein. Diese hydrophoben Verbindungen (D) werden von der Fachwelt auch als Costabilisatoren bezeichnet.

Bei den hydrophoben Verbindungen (D) handelt es sich um wasserunlösliche niedermolekulare, oligomere oder polymere Substanzen. Beispiele geeigneter hydrophober Verbindungen (D) sind Ester von 3 bis 6 Kohlenstoffatomen aufweisenden alpha,beta-monoolefinisch ungesättigten Carbonsäuren mit Alkoholen mit 12 bis 30 Kohlenstoffatomen im Alkylrest; Ester von Vinyl- und/oder Allylalkohol mit 12 bis 30 Kohlenstoffatome im Molekül aufweisenden Alkanmonocarbon-, sulfon- und/oder phosphonsäuren; Amide von 3 bis 6 Kohlenstoffatome aufweisenden alpha,beta-monoolefinisch ungesättigten Carbonsäuren mit Alkylaminen, mit 12 bis 30 Kohlenstoffatomen im Alkylrest; Makromomere auf der Basis olefinisch ungesättigter Verbindungen mit im statstischen Mittel mindestens einer, insbesondere endständigen, olefinisch ungesättigten Gruppe im Molekül; Polysiloxanmakromonomere mit im statistischen Mittel mindestens einer, insbesondere endständigen, olefinisch ungesättigten Gruppe im Molekül; oligomere und/oder polymere Polymerisations-, Polykondensations- und/oder Polyadditionsprodukte; wasserunlösliche Molekulargewichtsregler, insbesondere Mercaptane; aliphatische, cycloaliphatische und/oder aromatische halogenierte und/oder nicht halogenierte Kohlenwasserstoffe; Alkanole und/oder Alkylamine mit mindestens 12 Kohlenstoffatomen im Alkylrest; Organosilane und/oder -siloxane; pflanzliche, tierische, halbsynthetische und/oder synthetische Öle; hydrophobe Farbstoffe. Weiterer Beispiele geeigneter hydrophober Verbindungen (D) bzw. Costabilisatoren (D) sowie die Mengen, in denen sie vorteilhafterweise angewandt werden, sind aus der deutschen Patentanmeldung DE-A-196 28 142, Seite 4, Zeilen 37 bis 59, bekannt.

Des weiteren können die erfindungsgemäß zu verwendenden Monomeren (A) und (B) in der Gegenwart von Emulgatoren und/oder Schutzkolloiden (E) copolymerisiert werden.Beispiele geeigneter Emulgatoren und/oder Schutzkolloide (E) sowie die Mengen, in denen sie vorteilhafterweise angewandt werden, gehen aus der deutschen Patentanmeldung DE-A-196 28 142, Seite 3, Zeilen 8 bis 48, hervor.

Hinsichtlich der Molekulargewichtsverteilung ist das aus den Comonomeren (A) und (B) gebildete Copolymerisat keinerlei Beschränkungen unterworfen. Vorteilhafterweise wird aber die Copolymerisation so geführt, daß eine Molekulargewichtsverteilung Mw/Mn gemessen mit Gelpermeationschromatographie unter Verwendung von Polystyrol als Standard von ≤ 12, besonders bevorzugt ≤ 10 und insbesondere ≤ 7 resultiert. Die Molekulargewichte der Bestandteile (A) sind durch die Wahl des Verhältnisses von Monomer (A) zu Monomer (B) zu radikalischem Initiator in weiten Grenzen steuerbar. Dabei bestimmt insbesondere der Gehalt an Monomer (B) das Molekulargewicht, und zwar derart, daß je größer der Anteil an Monomer (B) ist, desto geringer ist das erhaltene Molekulargewicht.

Als Reaktoren für die Copolymerisationsverfahren kommen die üblichen und bekannten Rührkessel, Rührkesselkaskaden, Rohrreaktoren, Schlaufenreaktoren oder Taylorreaktoren, wie sie beispielsweise in den Patentschriften DE-B-1 071 241 oder EP-A-0 498 583 oder in dem Artikel von K. Kataoka in Chemical Engineering Science, Band 50, Heft 9, 1995, Seiten 1409 bis 1416, beschrieben werden, in Betracht. Vorzugsweise wird die radikalische Copolymerisation in Rührkesseln oder Taylorreaktoren, durchgeführt, wobei die Taylorreaktoren so ausgelegt werden, daß auf der gesamten Reaktorlänge die Bedingungen der Taylorströmung erfüllt sind, selbst wenn sich die kinematische Viskosität des Reaktionsmediums aufgrund der Copolymerisation stark ändert, insbesondere ansteigt.

Erfindungsgemäß wird die Copolymerisation in einem wäßrigen Medium durchgeführt.

Das wäßrige Medium enthält im wesentlichen Wasser. Hierbei kann das wäßrige Medium außer den vorstehend im Detail beschriebenen Vernetzungsmitteln (C) sowie gegebenenfalls hydrophoben Verbindungen (D) und/oder Emulgatoren und/oder Schutzkolloiden (E) übliche und bekannte Lackadditive (F) und/oder sonstige gelöste feste, flüssige oder gasförmige organische und/oder anorganische, nieder- und/oder hochmolekulare Stoffe enthalten, sofern diese nicht die Copolymerisation in negativer Weise beeinflussen oder gar hemmen. Im Rahmen der vorliegenden Erfindung ist unter dem Begriff "untergeordnete Menge" eine Menge zu verstehen, welche den wäßrigen Charakter des wäßrigen Mediums nicht aufhebt.

Bei dem wäßrigen Medium kann es sich aber auch um reines Wasser handeln.

Die Copolymerisation wird vorteilhafterweise bei Temperaturen oberhalb der Raumtemperatur durchgeführt, wobei bevorzugt ein Temperaturbereich von 30 bis 95°C, ganz besonders bevorzugt 50 bis 90°C, gewählt wird.

Bei Verwendung besonders leicht flüchtiger Monomere (A) und/oder (B) kann die Copolymerisation auch unter Druck, vorzugsweise unter 1,5 bis 3.000 bar, besonders bevorzugt 5 bis 1.500 und insbesondere 10 bis 1.000 bar durchgeführt werden. Hierbei können in Einzelfällen auch höhere Temperaturen als 95°C angewandt werden.

Hierbei erweist sich als besonderer Vorteil des erfindungsgemäßen Verfahrens, daß es auch in batch-Fahrweise durchgeführt werden kann. Ansonsten können auch die in der deutschen Patentanmeldung DE-A-196 28 142, Seite 4, Zeilen 6 bis 36, beschriebenen Fahrweisen angewandt werden.

Erfindungsgemäß wird die Copolymerisation in einer Mikro- oder Miniemulsion, insbesondere einer Miniemulsion, durchgeführt. Hierbei liegt der mittlere Teilchendurchmesser der emulgierten Monomertröpfchen unter 500 nm. Vorzugsweise liegt er bei 10 bis 500 nm, bevorzugt 50 bis 400 nm und ganz besonders bevorzugt 100 bis 350 nm. Bei dem Teilchendurchmesser handelt es sich um den sogenannten z-mittleren Teilchendurchmesser, der mittels der Photonenkorrelationsspektroskopie nach dem Prinzip der dynamischen, quasielastischen Lichtstreuung bestimmt wird. Hierfür kann beispielsweise ein Coulter N4 Plus Particle Analyzer der Firma Coulter Scientific Instruments oder ein PCS Malvern Zetasizer 1000 benutzt werden. Üblicherweise wird die Messung an einer wäßrigen Emulsion, welche 0,01 Gew.-% der emulgierten Monomertröpfchen enthält, durchgeführt. Die wäßrigen Emulsion enthält des weiteren in der wäßrigen Phase die entsprechenden Monomeren in gelöster Form (bis zur Sättigung), damit sich die emulgierten Monomertröpfchen nicht auflösen.

Das erfindungsgemäße Verfahren kann so ausgeführt werden, daß die vorstehend beschriebene bimodale Teilchengrößenverteilung resultiert. Verfahren zur Herstellung bimodaler Teilchengrößenverteilungen sind auf dem hier in Rede stehenden technologischen Gebiet üblich und bekannt. Vorzugsweise wird das in der deutschen Patentanmeldung DE-A-196 28 142, Seite 5, Zeilen 31 bis 49, beschriebene Saat-Verfahren angewandt.

Die Herstellung der Miniemulsion im Rahmen des erfindungsgemäßen Verfahrens weist keine methodischen Besonderheiten auf, sondern erfolgt nach den üblichen und bekannten Verfahren der Dispergierung oder Emulgierung in einem hohen Scherfeld. Beispiele geeigneter Verfahren werden in den Patentschriften DE-A-196 28 142, Seite 5, Zeilen 1 bis 30, DE-A-196 28 143, Seite 7, Zeilen 30 bis 58, oder EP-A-0 401 565,Zeilen 27 bis 51, beschrieben.

Es ist ein wesentlicher Vorteil der erfindungsgemäßen Primärdispersionen, daß sie bereits als solche als erfindungsgemäßer Beschichtungsstoffe, bevorzugt Füller, Unidecklacke, Wasserbasislacke und Klarlacke, insbesondere Klarlacke, verwendet werden können. Für diese Verwendungszwecke kann den erfindungsgemäßen Primärdispersionen vor, während und/oder nach ihrer Herstellung mindestens ein übliches und bekanntes Lackadditiv (F) in wirksamen Mengen zugesetzt werden. Hierbei werden vor oder während der Herstellung der erfindungsgemäßen Primärdispersionen nur solche Lackadditive (F) zugesetzt, die die Miniemulsionspolymerisation nicht stören oder gar ganz inhibieren. Der Fachmann kann solche Lackadditive (F) anhand seines allgemeinen Fachwissens identifizieren. Vorzugsweise werden die genannten Lackadditive (F) nach der Herstellung der erfindungsgemäßen Primärdispersionen zugesetzt.

Beispiele geeigneter Lackadditive (F) sind Pigmente, wie sie in Römpp Lexikon Lacke und Druckfarben, Georg Thieme Verlag, 1998, Seiten 176, »Effektpigmente«; Seiten 380 und 381 »Metalloxid-Glimmer-Pigmente« bis »Metallpigmente«; Seiten 180 und 181, »Eisenblau-Pigmente« bis »Eisenoxidschwarz«; Seiten 451 bis 453, »Pigmente« bis »Pigmentsvolumenkonzentration«; Seite 563, »Thioindigo-Pigmente«; und Seite 567, »Titandioxid-Pigmente«; beschrieben werden. Diese Additive (F) werden verwendet, wenn die erfindungsgemäßen Beschichtungsstoffe als Füller, Unidecklacke oder Wasserbasislacke, insbesondere aber als Wasserbasislacke im Rahmen des sogenannten Naß-in-naß-Verfahrens (vgl. beispielsweise das europäische Patent 0 089 497) zur Herstellung farb- und/oder effektgebender Mehrschichtlackierungen verwendet werden.

Weitere Beispiele geeigneter Lackadditive (F), die sowohl in den pigmentierten Lacken als auch in den nicht pigmentierten verwendet werden können, sind oligomere und polymere, thermisch härtbare, lineare und/oder verzweigte und/oder blockartig, kammartig und/oder statistisch aufgebaute Poly(meth)acrylate oder Acrylatcopolymerisate, insbesondere die in der Patentschrift DE-A-197 36 535 beschriebenen, Polyester, insbesondere die in den Patentschriften DE-A-40 09 858 oder DE-A-44 37 535 beschriebenen, Alkyde, acrylierte Polyester, Polylactone, Polycarbonate, Polyether, Epoxidharz-Amin-Addukte, (Meth)Acrylatdiole, partiell verseifte Polyvinylester, Polyurethane und acrylierte Polyurethane, wie die in den Patentschriften EP-A-0 521 928, EP-A-0 522 420, EP-A-0 522 419, EP-A-0 730 613 oder DE-A-44 37 535 beschriebenen, oder Polyharnstoffe

Weitere Beispiele geeigneter Additive (F) sind organische und anorganische Füllstoffe, thermisch härtbare Reaktiverdünner, niedrig siedende und/oder hochsiedende organische Lösemittel ("lange Lösemittel"), UV-Absorber, Lichtschutzmittel, Radikalfänger, thermolabile radikalische Initiatoren, Katalysatoren für die Vernetzung, Entlüftungsmittel, Slipadditive, Polymerisationsinhibitoren, Entschäumer, Emulgatoren, Netzmittel, Haftvermittler, Verlaufmittel, filmbildende Hilfsmittel, rheologiesteuernde Additive oder Flammschutzmittel. Weitere Beispiele geeigneter Lackadditive werden in dem Lehrbuch »Lackadditive« von Johan Bieleman, Wiley-VCH, Weinheim, New York, 1998, beschrieben.

Sollen die erfindungsgemäßen Beschichtungsstoffe auch mit aktinischer Strahlung härtbar sein (Dual Cure), enthalten sie Additive (F), die mit aktinischer Strahlung härtbar sind. Bei der aktinischen Strahlung kann es sich um elektromagnetische Strahlung wie nahes Infrarot (NIR), sichtbares Licht, UV-Licht oder Röntgenstrahlung oder um Korpuskularstrahlung wie Elektronenstrahlung handeln. Beispiele geeigneter mit aktinischer Strahlung härtbarer Additive (F) sind aus dem deutschen Patent DE-C-197 09 467 bekannt

Methodisch weist die Applikation der erfindungsgemäßen Beschichtungsstoffe keine Besonderheiten auf, sondern kann durch alle üblichen Applikationsmethoden, wie z.B. Spritzen, Rakeln, Streichen, Gießen, Tauchen, Träufeln oder Walzen erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen.

Als Substrate kommen alle zu lackierenden Oberflächen, die durch eine Härtung der hierauf befindlichen Lackierungen unter Anwendung von Hitze nicht geschädigt werden, in Betracht; das sind z. B. Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel, sowie Verbunde dieser Materialien. Demnach ist der erfindungsgemäße Beschichtungsstoff auch für Anwendungen außerhalb der Automobillackierung geeignet. Hierbei kommt er insbesondere für die Lackierung von Möbeln und die industrielle Lackierung, inklusive Coil Coating, Container Coating und die Imprägnierung oder Beschichtung elektrotechnischer Bauteile, in Betracht. Im Rahmen der industriellen Lackierungen eignet er sich für die Lackierung praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht. Im Falle von nichtfunktionalisierten und/oder unpolaren Kunststoffoberflächen können diese vor der Beschichtung in bekannter Weise einer Vorbehandlung, wie mit einem Plasma oder mit Beflammen, unterzogen oder mit einer Hydrogrundierung versehen werden.

Auch die Härtung der applizierten erfindungsgemäßen Beschichtungsstoffe weist keine methodischen Besonderheiten auf, sondern erfolgt nach den üblichen und bekannten thermischen Methoden wie Erhitzen in einem Umluftofen oder Bestrahlen mit IR-Lampen, die im Falle von Dual Cure noch durch die Bestrahlung mit aktinischer Strahlung ergänzt werden kann. Hierbei können Strahlenquellen wie Quecksilberhoch- oder -niederdruckdampflampen, welche gegebenenfalls mit Blei dotiert sind, um ein Strahlenfenster bis zu 405 nm zu öffnen, oder Elektronenstrahlquellen angewandt werden.

Die resultierenden erfindungsgemäßen Beschichtungen, insbesondere die erfindungsgemäßen ein- oder mehrschichtigen farb- und/oder effektgebenden Lackierungen und Klarlackierungen sind einfach herzustellen und weisen hervorragende optische Eigenschaften und eine sehr hohe Chemikalien- und Witterungsbeständigkeit auf. Demgemäß sind auch die erfindungsgemäßen Substrate, die mindestens eine erfindungsgemäße Beschichtung enthalten, von einem besonders hohen Gebrauchswert und einer besonders langen Gebrauchsdauer, was sie für Hersteller und Anwender wirtschaftlich und technisch besonders attraktiv macht.

### Beispiele

### Beispiele 1 bis 4

### Die Herstellung erfindungsgemäßer Primärdispersionen und Beschichtungsstoffe nach dem erfindungsgemäßen Verfahren

Für die Durchführung der Beispiele 1 bis 4 wurde zunächst ein Emulgator im Wasser gelöst. Anschließend wurden olefinisch ungesättigte Monomere (A), Diphenylethylen (B), ein blockiertes Polyisocyanat (C) und ein öllöslicher Initiator miteinander vermischt. Die resultierende organische Lösung wurde unter Verwendung eines Ultraturrax bei Raumtemperatur innerhalb von 40 Sekunden in eine milchige Emulsion überführt. Die resultierenden Präemulsionen waren für einige Minuten stabil, d. h., sie wiesen keine Phasentrennung auf und konnten somit problemlos mittels eines Hochdruckhomogenisierungsaggregats zu feinteiligen Miniemulsionen weiterverarbeitet werden. Zur Herstellung der Miniemulsionen der Beispiele 1 bis 4 wurden die einzelnen Präemulsionen in den Vorratsbehälter eines Druckentspannungshomogenisators gegeben und während 10 Minuten bei Maximaldruck in Kreisfahrweise unter Kühlung emulgiert Die Miniemulsionen der Beispiele 1 bis 4 wiesen nach der Emulgierung Partikelgrößen im Bereich von 100 nm bis 500 nm und einen Gehalt an Monomermischung und Polyisocyanat (100 %ig) von, bezogen auf die Gesamtmenge der jeweiligen Miniemulsion, 40 Gew.-% auf und waren über mehrere Wochen lagerstabil.

Die Tabelle 1 gibt einen Überblick über die verwendeten Ausgangsprodukte der Miniemulsionen der Beispiele 1 bis 4, die Mengen, in denen sie eingesetzt wurden, sowie die z-mittleren Teilchendurchmesser der Monomertröpfchen, die mittels der Photonenkorrelationsspektroskopie nach dem Prinzip der dynamischen, quasielastischen Lichtstreuung bestimmt wurden.

Die Miniemulsionen der Beispiele 1 bis 4 wurden in geeignete Stahlreaktoren überführt und unter Rühren langsam auf 80 bis 90°C erwärmt Die Miniemulsionen wurden bei dieser Temperatur so lange gerührt, bis der Feststoffgehalt der resultierenden erfindungsgemäßen Primärdispersionen 1 bis 4 nicht mehr länger anstieg. Die erfindungs gemäßen Primärdispersionen waren über mehrere Wochen absetzstabil.

Die Tabelle 1 gibt einen Überblick über die Polymerisationsdauer, die nach Fox errechnete theoretische Glasübergangstemperatur Tg der in den erfindungsgemäßen Primärdispersionen enthaltenen Copolymerisate, ihre Hydroxylzahl, ihr Molekulargewicht und ihre Uneinheitlichkeit der Molekulargewichtsverteilung sowie die z-mittleren Teilchendurchmesser und die Feststoffgehalte und die pH-Werte der erfindungsgemäßen Primärdispersionen.

Die z-mittleren Teilchendurchmesser der Miniemulsionen 1 bis 4 und der erfindungsgemäßen Primärdispersionen 1 bis 4 wurden mit einem PCS Malvern Zetasizer 1000 gemessen.

Die erfindungsgemäßen Primärdispersionen der Beispiele 1 bis 4 wurden mit einer Naßfilmdicke von 150 µm auf Glasplatten aufgerakelt und während 30 Minuten bei 145°C, 160°C und 180°C eingebrannt.

Die Tabelle 1 gibt einen Überblick über wichtige anwendungstechnische Eigenschaften der resultierenden erfindungsgemäßen Klarlackierungen der Beispiele 1 bis 4.

Die Ergebnisse belegen, daß die erfindungsgemäßen Klarlackierungen eine hohe Lösemittelstabilität, einen hohen Glanz und eine glatte Oberfläche aufweisen.

**Tabelle 1:**

| **Stoffliche Zusammensetzung und Eigenschaften der erfindungsgemäßen Miniemulsionen 1 bis 4, Polymerisationsbedingungen, stoffliche Zusammensetzung und Eigenschaften der erfindungsgemäßen Primärdispersionen 1 bis 4 sowie wichtige anwendungstechnische Eigenschaften der erfindungsgemäßen Klarlackierungen 1 bis 4** | | | | |
|---|---|---|---|---|
| **Beispiel** | **1** | **2** | **3** | **4** |
| Miniemulsion: | | | | |
| Zusammensetzung (Gewichtsteile): | | | | |
| Emulgator ^{a)} | 0,521 | 0,521 | 0,521 | 0,521 |
| Methylmethacrylat | 16,95 | 16,95 | 16,95 | 16,95 |
| n-Butylmethacrylat | 13,69 | 13,69 | 13,69 | 13,69 |
| Styrol | 15,32 | 14,99 | 14,34 | 13,04 |
| Hydroxypropylmethacrylat | 18,25 | 18,25 | 18,25 | 18,25 |
| Diphenylethylen | 0,978 | 1,3 | 1,955 | 3,264 |
| Blockiertes Polyisocyanat^{b)} | 34,29 | 34,29 | 34,29 | 34,29 |
| Verhältnis OH : NCO | 1 : 1 | 1 : 1 | 1 : 1 | 1 : 1 |
| Teilchendurchmesser (nm) | 151 | 144 | 153 | 151 |

| Polymerisation: | | | | |
|---|---|---|---|---|
| Initiator ^{c)}(Gewichtsteile pro 100 | | | | |
| Gewichtsteile Emulgator, | | | | |
| Monomermischung und | | | | |
| blockiertes Polyisocyanat) | 3,26 | 3,26 | 3,26 | 3,26 |
| Polymerisationsdauer (h) | 10,5 | 7,0 | 17,5 | 11,0 |
| | | | | |

| Primärdispersion: | | | | |
|---|---|---|---|---|
| Feststoffgehalt ^{d)} (Gew.-%) | 37,9 | 36,2 | 35,7 | 34,7 |
| Teilchendurchmesser (nm) | 143 | 154 | 154 | 153 |
| pH-Wert | 6,0 | 6,0 | 6,0 | 6,0 |
| Bodensatz naß (g) | 0 | 0 | 0 | 0 |
| | | | | |

| Copolymerisat: | | | | |
|---|---|---|---|---|
| Zahlenmittleres Molekulargewicht | | | | |
| Mn ^{e)} (Dalton) | 19.300 | 14.880 | 11.550 | 8.787 |
| Massenmittlere Molekulargewicht | | | | |
| Mw ^{e)} (Dalton) | 110.600 | 80.490 | 59.150 | 44.660 |
| Uneinheitlichkeit Mw/Mn | 5,73 | 5,41 | 5,18 | 5,08 |
| Glasübergangstemperatur | | | | |
| (theoretisch nach Fox) (°C) | 74,55 | 74,55 | 74,55 | 74,55 |
| Hydroxylzahl (mg KOH/g) | 109 | 109 | 109 | 109 |
| | | | | |

| Klarlackierung: | | | | |
|---|---|---|---|---|
| MEK-DH ^{f)} (145/160/180°C) | 3/190/ | 5/45/ | 3/90/ | 1/74/ |
| | >200 | >200 | >200 | >200 |
| Glanz (visuell) | hoch | hoch | hoch | hoch |
| Oberflächenstruktur ^{g)} (visuell) | 2 | 1 | 1 | 1 |

| | | | | |
|---|---|---|---|---|
| a) Natriumlaurylsulfat, Texapon® derFirma Henkel; | | | | |
| b) mit Dimethylpyrazol blockiertes handelsübliches Polyisocyanat; | | | | |
| c) tert.- Butylperoxyethylhexanoat; | | | | |
| d) 130 °C, eine Stunde; | | | | |
| e) gemessen mit Gelpermeationschromatographie mit Polystyrol als internem Standard; | | | | |
| f) Anzahl der Doppelhübe mit einem mit Methylethylketon getränkten Wattebausch; | | | | |
| g) Benotung: 1 = gut, 2 = befriedigend, 3 = schlecht; | | | | |

### Beispiele 5 und 6

### Die Herstellung erfindungsgemäßer Primärdispersionen und Klarlackierungen nach dem erfindungsgemäßen Verfahren

Für die Durchführung der Beispiele 5 und 6 wurde das Verfahren des Beispiels 2 wiederholt, nur daß anstelle des öllöslichen Initiators tert.-Butylperoxyethylhexanoat der wasserlösliche Initiator Ammoniumperoxodisulfat angewandt wurde. Außerdem wurden bei dem Beispiel 5 die Miniemulsion und die 24 %ige wäßrige Ammoniumperoxodisulfatlösung in zwei getrennten Zuläufen gleichzeitig über einen Zeitraum von zwei Stunden zudosiert. Des weiteren wurde bei Beispiel 6 die Miniemulsion bei 80°C vorgelegt und gerührt, und die 24 %ige Ammoniumperoxodisulfatlösung wurde während zwei Stunden gleichmäßig zugetropft. Die Miniemulsionen 5 und 6 wiesen einen Gehalt an Monomermischung und Polyisocyanat (100 %ig) von, bezogen auf die Gesamtmenge der jeweiligen Miniemulsion, 35 Gew.-% auf und waren über mehrere Wochen lagerstabil.

Die Tabelle 2 gibt einen Überblick über die Ausgangsprodukte und ihre Mengen sowie die Versuchsergebnisse.

**Tabelle 1:**

| **Stoffliche Zusammensetzung und Eigenschaften der erfindungsgemäßen Miniemulsionen 5 und 6, Polymerisationsbedingungen, stoffliche Zusammensetzung und Eigenschaften der erfindungsgemäßen Primärdispersionen 5 und 6 sowie wichtige anwendungstechnische Eigenschaften der erfmdungsgemäßen Klarlackierungen 5 und 6** | | |
|---|---|---|
| **Beispiel** | **5** | **6** |
| Miniemulsion: | | |
| Zusammensetzung (Gewichtsteile): | | |
| Emulgator ^{a)} 0,2 0,2 | | |
| Methylmethacrylat | 17, 0 | 17,0 |
| n-Butylmethacrylat | 13,73 | 13,73 |
| Styrol | 15,04 | 15, 04 |
| Hydroxypropylmethacrylat | 18,31 | 18,31 |
| Diphenylethylen | 1,31 | 1,31 |
| Blockiertes Polyisocyanat ^{b)} | 34,4 | 34,4 |
| Verhältnis OH : NCO | 1 : 1 | 1 : 1 |
| Teilchendurchmesser (nm) | 210 | 210 |

| Polymerisation: | | |
|---|---|---|
| Initiator ^{c)} (Gewichtsteile pro 100 | | |
| Gewichtsteile Emulgator, | | |
| Monomermischung und | | |
| blockiertes Polyisocyanat) | 1,96 | 1,96 |
| Polymerisationsdauer (h) | 4,0 | 3,0 |

| Primärdispersion: | | |
|---|---|---|
| Feststoffgehalt ^{d)} (Gew.-%) | 32,7 | 34,4 |
| Teilchendurchmesser (nm) | 273 | 314 |
| pH-Wert | 3,6 | 3,1 |

| Copolymerisat: | | |
|---|---|---|
| Zahlenmittleres Molekulargewicht | | |
| Mn ^{e)} (Dalton) | 11.740 | 12.020 |
| Massenmittlere Molekulargewicht | | |
| Mw ^{e)} (Dalton) | 19.830 | 20.660 |
| Uneinheitlichkeit Mw/Mn | 1,69 | 1,72 |
| Glasübergangstemperatur | | |
| (theoretisch nach Fox) (°C) | 74.55 | 74.55 |
| Hydroxylzahl (mg KOH/g) | 109 | 109 |

| Klarlackierung: | | |
|---|---|---|
| MEK-DH ^{f)} (145/160/180°C) | 78/200/ | 81/200/ |
| | >200 | >200 |
| Oberflächenstruktur ^{g)} (visuell) | 2 | 2 |

| | | |
|---|---|---|
| a) Natriumlaurylsulfat, Texapon® derFirma Henkel; | | |
| b) mit Dimethylpyrazol blockiertes handelsübliches Polyisocyanat; | | |
| c) Ammoniumperoxodisulfat 100 %ig; | | |
| d) 130 °C, eine Stunde; | | |
| e) gemessen mit Gelpermeationschromatographie mit Polystyrol als interne: Standard; | | |
| f) Anzahl der Doppelhübe mit einem mit Methylethylketon getränkte Wattebausch; | | |
| g) Benotung: 1 = gut, 2 = befriedigend, 3 = schlecht; | | |

Die Ergebnisse belegen die besonders hohe Lösemittelbeständigkeit der erfindungsgemäßen Klarlackierungen 5 und 6.

## Patentansprüche

1. Wäßrige Primärdispersionen und Beschichtungsstoffe, enthaltend dispergierte und/oder emulgierte, feste und/oder flüssige Polymerpartikel und/oder dispergierte feste Kern-Schale-Partikel eines Teilchendurchmesser ≤ 500 nm, herstellbar durch kontrollierte radikalische Mikro- oder Miniemulsionspolymerisation von
A) mindestens einem olefinisch ungesättigten Monomer und
B) mindestens einem vom olefinisch ungesättigten Monomer (A) verschiedenen olefinisch ungesättigten Monomer der allgemeinen Formel I
**R**^{**1**}**R**^{**2**}**C=CR**^{**3**}**R**^{**4**} **(I),**
worin die Reste R¹, R² , R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen;
in der Gegenwart von zumindest
C) mindestens einem hydrophoben Vernetzungsmittel für das aus den Ausgangsprodukten (A) und (B) resultierende Copolymerisat.

2. Verfahren zur Herstellung wäßriger Primärdispersionen und Beschichtungsstoffe, enthaltend dispergierte und/oder emulgierte, feste und/oder flüssige Polymerpartikel und/oder dispergierte feste Kern-Schale-Partikel eines Teilchendurchmesser ≤ 500 nm, durch kontrollierte radikalische Mikro- oder Miniemulsionspolymerisation von
A) mindestens einem olefinisch ungesättigten Monomer und
B) mindestens einem vom olefinisch ungesättigten Monomer (A) verschiedenen olefinisch ungesättigten Monomer der allgemeinen Formel I
**R**^{**1**}**R**^{**2**}**C=R**^{**3**}**R**^{**4**} **(I),**
worin die Reste R¹, R² , R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen;
in der Gegenwart von zumindest
C) mindestens einem hydrophoben Vemetzungsmittel für das aus den Ausgangsprodukten (A) und (B) resultierende Copolymerisat

3. Die wäßrigen Primärdispersionen und Beschichtungsstoffe nach Anspruch 1 und das Verfahren nach Anspruch 2, **dadurch gekennzeichnet, daß** es sich bei den Arylresten R¹, R², R³ und/oder R⁴ der Verbindung (B) um Phenyl- oder Naphthylreste, insbesondere Phenylreste, handelt

4. Die wäßrigen Primärdispersionen und Beschichtungsstoffe nach Anspruch 1 oder 3 und das Verfahren nach Anspruch 2 oder 3, **dadurch gekennzeichnet, daß** die Substituenten in den Resten R¹, R², R³ und/oder R⁴ der Verbindung (B) elektronenziehende oder elektronenschiebende Atome oder organische Reste, insbesondere Halogenatome, Nitril-, Nitro-, partiell oder vollständig halogenierte Alkyl-, Cycloalkyl-, Alkylcycloalkyl-, Cycloalkylalkyl-, Aryl-, Alkylaryl-, Cycloalkylaryl- Arylalkyl- und Arylcycloalkylreste; Aryloxy-, Alkyloxy- und Cycloalkyloxyreste; Arylthio-, Alkylthio- und Cycloalkylthioreste und/oder primäre, sekundäre und/oder tertiäre Aminogruppen sind.

5. Die wäßrigen Primärdispersionen und Beschichtungsstoffe nach einem der Ansprüche 1, 3 oder 4 und das Verfahren nach einem der Ansprüche 2 bis 4, **dadurch gekennzeichnet, daß** als Vernetzungsmittel (C) blockierte Polyisocyanate, Tris(alkoxycarbonylamino)triazine und/oder vollständig veretherte Aminoplastharze verwendet werden.

6. Die wäßrigen Primärdispersionen und Beschichtungsstoffe nach einem der Ansprüche 1 oder 3 bis 5 und das Verfahren nach einem der Ansprüche 2 bis 5, **dadurch gekennzeichnet, daß** die Monomeren (A) und (B) in der Gegenwart mindestens einer weiteren, von dem Vernetzungsmittel (C) verschiedenen hydrophoben Verbindung (D) copolymerisiert werden.

7. Die wäßrigen Primärdispersionen und Beschichtungsstoffe und das Verfahren nach Anspruch 6, **dadurch gekennzeichnet, daß** es sich bei den hydrophoben Verbindungen (D) um wasserunlösliche niedermolekulare, oligomere oder polymere Substanzen handelt.

8. Die wäßrigen Primärdispersionen und Beschichtungsstoffe und das Verfahren nach Anspruch 7, **dadurch gekennzeichnet, daß** als hydrophobe Verbindungen (D) Ester von 3 bis 6 Kohlenstoffatomen aufweisenden alpha,betamonoolefinisch ungesättigten Carbonsäuren mit Alkoholen mit 12 bis 30 Kohlenstoffatomen im Alkylrest; Ester von Vinyl- und/oder Allylalkohol mit 12 bis 30 Kohlenstoffatome im Molekül aufweisenden Alkanmonocarbon-, sulfon- und/oder phosphonsäuren; Amide von 3 bis 6 Kohlenstoffatome aufweisenden alpha,beta-monoolefinisch ungesättigten Carbonsäuren mit Alkylaminen mit 12 bis 30 Kohlenstoffatomen im Alkylrest; Makromomere auf der Basis olefinisch ungesättigter Verbindungen mit im statstischen Mittel mindestens einer, insbesondere endständigen, olefinisch ungesättigten Gruppe im Molekül; Polysiloxanmakromonomere mit im statstischen Mittel mindestens einer, insbesondere endständigen, olefinisch ungesättigten Gruppe im Molekül; oligomere und/oder polymere Polymerisations-, Polykondensations- und/oder Polyadditionsprodukte; wasserunlösliche Molekulargewichtsregler, insbesondere Mercaptane; aliphatische, cycloaliphatische und/oder aromatische halogenierte und/oder nicht halogenierte Kohlenwasserstoffe; Alkanole und/oder Alkylamine mit mindestens 12 Kohlenstoffatomen im Alkylrest; Organosilane und/oder - siloxane; pflanzliche, tierische, halbsynthetische und/oder synthetische Öle; und/oder hydrophobe Farbstoffe verwendet werden.

9. Die wäßrigen Primärdispersionen und Beschichtungsstoffe nach einem der Ansprüche 1 oder 3 bis 8 und das Verfahren nach einem der Ansprüche 2 bis 8, **dadurch gekennzeichnet, daß** die Monomeren (A) und (B) in der Gegenwart von Emulgatoren und/oder Schutzkolloiden (E) copolymerisiert werden.

10. Die wäßrigen Primärdispersionen und Beschichtungsstoffe nach einem der Ansprüche 1 oder 3 bis 9 und das Verfahren nach einem der Ansprüche 2 bis 9, **dadurch gekennzeichnet, daß** als Monomere (A)
a1) im wesentlichen säuregruppenfreien (Meth)acrylsäureester;
a2) Monomere, welche mindestens eine Hydroxylgruppe pro Molekül tragen und im wesentlichen säuregruppenfrei sind;
a3) Monomere, welche mindestens eine Säuregruppe, die in die entsprechende Säureaniongruppe überführbar ist, pro Molekül tragen;
a4) Vinylester von in alpha-Stellung verzweigten Monocarbonsäuren mit 5 bis 18 Kohlenstoffatome im Molekül;
a5) Umsetzungsprodukte aus Acrylsäure und/oder Methacrylsäure mit dem Glycidylester einer in alpha-Stellung verzweigten Monocarbonsäure mit 5 bis 18 C-Atomen je Molekül;
a6) cyclische und/oder acyclische Olefine;
a7) (Meth)Acrylsäureamide;
a8) Epoxidgruppen enthaltende Monomere;
a9) vinylaromatische Kohlenwasserstoffe;
a10) Nitrile;
a11) Vinylverbindungen, insbesondere Vinyl- und/oder Vinylidendihalogenide, N-Vinylpyrrolidon, Vinylether und/oder Vinylester;
a 12) Allylverbindungen, insbesondere Allylether und -ester;
a13) Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül ausweisen; und/oder
a14) Acryloxysilan-enthaltende Vinylmonomere, herstellbar durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsäure;
verwendet werden, mit der Maßgabe, daß die Monomeren (a3) nicht als die alleinigen Monomeren (A) verwendet werden.

11. Die wäßrigen Primärdispersionen und Beschichtungsstoffe und das Verfahren nach Anspruch 10, **dadurch gekennzeichnet, daß** man mindestens ein Monomer (A) verwendet, das reaktive funktionelle Gruppen enthält, die mit den komplementären reaktiven funktionellen Gruppen der Vernetzungsmittel (C) Vernetzungsreaktionen eingehen können.

12. Die wäßrigen Primärdispersionen und Beschichtungsstoffe nach einem der Ansprüche 1 oder 3 bis 11 und das Verfahren nach einem der Ansprüche 2 bis 11, **dadurch gekennzeichnet, daß** die kontrollierte radikalische Mikro- oder Miniemulsionspolymerisation durch wasser- und/oder öllösliche, Radikale bildende Initiatoren initiiert wird.

13. Die wäßrigen Primärdispersionen und Beschichtungsstoffe nach einem der Ansprüche 1 oder 3 bis 12 und das Verfahren nach einem der Ansprüche 2 bis 12, **dadurch gekennzeichnet, daß** es sich bei den dispergierten Teilchen um Kern-Schale-Partikel mit Kernen aus organischen Feststoffen und mit Schalen aus Polymerisaten, welche mindestens ein Monomer (A) und mindestens ein Monomer (B) einpolymerisiert enthalten, handelt.

14. Die wäßrigen Primärdispersionen und Beschichtungsstoffe nach einem der Ansprüche 1 oder 3 bis 13 und das Verfahren nach einem der Ansprüche 2 bis 13, **dadurch gekennzeichnet, daß** die Kerne der Kern-Schale-Partikel durch radikalische, insbesondere kontrollierte radikalische, Mikro- oder Miniemulsionspolymerisation hergestellt werden.

15. Die wäßrigen Primärdispersionen und Beschichtungsstoffe nach einem der Ansprüche 1 oder 3 bis 14, **dadurch gekennzeichnet, daß** sie mindestens ein Lackadditiv (F) enthalten.

16. Die wäßrigen Primärdispersionen und Beschichtungsstoffe nach einem der Ansprüche 1 oder 3 bis 15, **dadurch gekennzeichnet, daß** sie mit aktinischer Strahlung härtbare Bestandteile enthalten.

17. Verwendung der wäßrigen Primärdispersionen und Beschichtungsstoffe gemäß einem der Ansprüche 1 oder 3 bis 16 oder der nach dem Verfahren gemäß einem der Ansprüche 2 bis 13 hergestellten wäßrigen Primärdispersionen und Beschichtungsstoffe in der Automobilerst- und -reparaturlackierung, der industriellen Lackierung, inclusive Coil Coating, Container Coating und der Beschichtung elektrotechnischer Bauteile, und der Möbellackierung.

18. Grundierte oder ungrundierte Substrate, enthaltend mindestens eine ein- oder mehrschichtige Klarlackierung und/oder mindestens eine ein- oder mehrschichtige farb- und/oder effektgebende Lackierung auf der Basis der wäßrigen Primärdispersionen und Beschichtungsstoffe gemäß einem der Ansprüche 1 oder 3 bis 16 oder der nach dem Verfahren gemäß einem der Ansprüche 2 bis 14 hergestellten wäßrigen Primärdispersionen und Beschichtungsstoffe.

## Claims

1. Aqueous primary dispersions and coating materials comprising dispersed and/or emulsified, solid and/or liquid polymer particles and/or dispersed solid core-shell particles having a diameter ≤ 500 nm preparable by controlled free-radical microemulsion or miniemulsion polymerization of
A) at least one olefinically unsaturated monomer and
B) at least one olefinically unsaturated monomer which is different from the olefinically unsaturated monomer (A) and has the general formula I
**R**^{**1**}**R**^{**2**}**C=CR**^{**3**}**R**^{**4**} **(I)**
in which the radicals R¹, R², R³ and R⁴ independently of one another are hydrogen atoms or substituted or unsubstituted alkyl, cycloalkyl, alkylcycloalkyl, cycloalkylalkyl, aryl, alkylaryl, cycloalkylaryl arylalkyl or arylcycloalkyl radicals, with the proviso that at least two of the variables R¹, R², R³ and R⁴ are substituted or unsubstituted aryl, arylalkyl or arylcycloalkyl radicals, especially substituted or unsubstituted aryl radicals; in the presence of at least
C) at least one hydrophopic crosslinking agent for the copolymer resulting from the starting products (A) and (B).

2. Process for preparing aqueous primary dispersions and coating materials comprising dispersed and/or emulsified, solid and/or liquid polymer particles and/or dispersed solid core-shell particles having a diameter ≤ 500 nm by controlled free-radical microemulsion or miniemulsion polymerization of
A) at least one olefinically unsaturated monomer and
B) at least one olefinically unsaturated monomer which is different from the olefinically unsaturated monomer (A) and has the general formula I
**R**^{**1**}**R**^{**2**}**C=CR**^{**3**}**R**^{**4**} **(I)**
in which the radicals R¹, R², R³ and R⁴ independently of one another are hydrogen atoms or substituted or unsubstituted alkyl, cycloalkyl, alkylcycloalkyl, cycloalkylalkyl, aryl, alkylaryl, cycloalkylaryl arylalkyl or arylcycloalkyl radicals, with the proviso that at least two of the variables R¹, R², R³ and R⁴ are substituted or unsubstituted aryl, arylalkyl or arylcycloalkyl radicals, especially substituted or unsubstituted aryl radicals; in the presence of at least
C) at least one hydrophopic crosslinking agent for the copolymer resulting from the starting products (A) and (B).

3. The aqueous primary dispersions and coating materials of Claim 1 and the process of Claim 2, **characterized in that** the aryl radicals R¹, R², R³ and/or R⁴ of the compound (B) are phenyl or naphthyl radicals, especially phenyl radicals.

4. The aqueous primary dispersions and coating materials of Claim 1 or 3 and the process of Claim 2 or 3, **characterized in that** the substituents in the radicals R¹, R², R³ and/or R⁴ of the compound (B) are electron-withdrawing or electron-donating atoms or organic radicals, especially halogen atoms, nitrile, nitro, partially or fully halogenated alkyl, cycloalkyl, alkylcycloalkyl, cycloalkylalkyl, aryl, alkylaryl, cycloalkylaryl arylalkyl and arylcycloalkyl radicals; aryloxy, alkyloxy and cycloalkyloxy radicals; arylthio, alkylthio and cycloalkylthio radicals and/or primary, secondary and/or tertiary amino groups.

5. The aqueous primary dispersions and coating materials of one of Claims 1 3 or 4 and the process of one of Claims 2 to 4, **characterized in that** blocked polyisocyanates, tris(alkoxycarbonylamino)triazines and/or completely etherified amino resins are used as crosslinking agents (C).

6. The aqueous primary dispersions and coating materials of one of Claims 1 or 3 to 5 and the process of one of Claims 2 to 5, **characterized in that** the monomers (A) and (B) are copolymerized in the presence of at least one further hydrophobic compound (D) which differs from the crosslinking agents (C).

7. The aqueous primary dispersions and coating materials and the process of Claim 6, **characterized in that** the hydrophobic compounds (D) are water-insoluble polymers, oligomers or substances of low molecular mass.

8. The aqueous primary dispersions and coating materials and the process of Claim 7, **characterized in that** esters of alpha,beta-monoolefinically unsaturated carboxylic acids, having 3 to 6 carbon atoms, with alcohols having 12 to 30 carbon atoms in the alkyl radical; esters of vinyl alcohol and/or allyl alcohol with alkanemonocarboxylic, -sulfonic and/or -phosphonic acids having 12 to 30 carbon atoms in the molecule; amides of alpha,beta-monoolefinically unsaturated carboxylic acids having 3 to 6 carbon atoms with alkylamines having 12 to 30 carbon atoms in the alkyl radical; macromonomers based on olefinically unsaturated compounds having on average at least one olefinically unsaturated group, in particular at least one terminal olefinically unsaturated group, in the molecule; polysiloxane macromonomers having on average at least one olefinically unsaturated group, in particular at least one terminal olefinically unsaturated group, in the molecule; oligomeric and/or polymeric products of addition polymerization, polycondensation and/or polyaddition; water-insoluble molecular weight regulators, especially mercaptans; aliphatic, cycloaliphatic and/or aromatic halogenated and/or nonhalogenated hydrocarbons; alkanols and/or alkylamines having at least 12 carbon atoms in the alkyl radical; organosilanes and/or organosiloxanes; vegetable, animal, semisynthetic and/or synthetic oils; and/or hydrophobic dyes are used as hydrophobic compounds (D).

9. The aqueous primary dispersions and coatings materials of one of Claims 1 or 3 to 8 and the process of one of Claims 2 to 8, **characterized in that** the monomers (A) and (B) are copolymerized in the presence of emulsifiers and/or protective colloids (E).

10. The aqueous primary dispersions and coating materials of one of Claims 1 or 3 to 9 and the process of one of Claims 2 to 9, **characterized in that** as monomers (A)
a1) substantially acid-group-free (meth)acrylic esters;
a2) monomers which carry per molecule at least one hydroxyl group and are substantially free from acid groups;
a3) monomers which carry per molecule at least one acid group which can be converted into the corresponding acid anion group;
a4) vinyl esters of alpha-branched monocarboxylic acids having 5 to 18 carbon atoms in the molecule;
a5) reaction products of acrylic acid and/or methacrylic acid with the glycidyl ester of an alpha-branched monocarboxylic acid having from 5 to 18 carbon atoms per molecule;
a6) cyclic and/or acyclic olefins;
a7) (meth)acrylamides;
a8) monomers containing epoxide groups;
a9) vinylaromatic hydrocarbons;
a10) nitriles;
a11) vinyl compounds, especially vinyl halides and/or vinylidene dihalides, N-vinylpyrrolidone, vinyl ethers and/or vinyl esters;
a12) allyl compounds, especially allyl ethers and allyl esters;
a13) polysiloxane macromonomers having a number-average molecular weight Mn of from 1000 to 40,000 and containing on average from 0.5 to 2.5 ethylenically unsaturated double bonds per molecule; and/or
a14) acryloyloxysilane-containing vinyl monomers, preparable by reacting hydroxy-functional silanes with epichlorohydrin and then reacting the reaction product with methacrylic acid and/or hydroxyalkyl esters of (meth)acrylic acid;
are used, with the proviso that the monomers (a3) are not used as the sole monomers (A).

11. The aqueous primary dispersions and coating materials and the process of Claim 10, **characterized in that** at least one monomer (A) is used containing reactive functional groups which are able to enter into crosslinking reactions with the complementary reactive functional groups of the crosslinking agents (C).

12. The aqueous primary dispersions and coating materials of one of Claims 1 or 3 to 11 and the process of one of Claims 2 to 11, **characterized in that** the controlled free-radical microemulsion or miniemulsion polymerization is initiated by water-soluble and/or oil-soluble initiators which form free radicals.

13. The aqueous primary dispersions and coating materials of one of Claims 1 or 3 to 12 and the process of one of Claims 2 to 12, **characterized in that** the dispersed particles are core-shell particles with cores of organic solids and with shells of polymers which contain in copolymerized form at least one monomer (A) and at least one monomer (B).

14. The aqueous primary dispersions and coating materials of one of Claims 1 or 3 to 13 and the process of one of Claims 2 to 13, **characterized in that** the cores of the core-shell particles are prepared by free-radical, especially controlled free-radical, microemulsion or miniemulsion polymerization.

15. The aqueous primary dispersions and coating materials of one of Claims 1 or 3 to 14, **characterized in that** they comprise at least one coatings additive (F).

16. The aqueous primary dispersions and coating materials of one of Claims 1 or 3 to 15, **characterized in that** they comprise components which can be cured with actinic radiation.

17. Use of the aqueous primary dispersions and coating materials of one of Claims 1 or 3 to 16 or of the aqueous primary dispersions and coating materials prepared by the process of one of Claims 2 to 13 in automotive OEM finishing and refinishing, industrial coating, including coil coating, container coating and the coating of electrical components, and furniture coating.

18. Primed or unprimed substrates comprising at least one single-coat or multicoat clearcoat system and/or at least one single-coat or multicoat color and/or effect paint system based on the aqueous primary dispersions and coating materials of one of Claims 1 or 3 to 16 or on the aqueous primary dispersions and coating materials prepared by the process of one of Claims 2 to 14.

## Revendications

1. Dispersions aqueuses primaires et matières aqueuses de revêtement, contenant des particules solides et/ou liquides de polymère dispersées et/ou émulsionnées et/ou des particules solides à noyau-enveloppe dispersées ayant un diamètre de particule ≤ 500 nm, pouvant être préparées par polymérisation en micro- ou mini-émulsion radicalaire contrôlée de
A) au moins un monomère à insaturation oléfinique et
B) au moins un monomère à insaturation oléfinique différent du monomère à insaturation oléfinique (A), de formule générale I
R¹R²C=CR³R⁴ (I)
dans laquelle les radicaux R¹, R², R³ et R⁴ représentent, indépendamment les uns des autres, des atomes d'hydrogène ou des groupes alkyle, cycloalkyle, alkylcycloalkyle, cycloalkylalkyle, aryle, alkylaryle, cycloalkylaryle, arylalkyle ou arylcycloalkyle, substitués ou non substitués, étant entendu qu'au moins deux des variables R¹, R², R³ et R⁴ représentent des radicaux aryle, arylalkyle ou arylcycloalkyle substitués ou non substitués, en particulier des radicaux aryle substitués ou non substitués, en présence d'au moins
C) au moins un agent de réticulation hydrophobe pour le copolymère résultant des produits de départ (A) et (B).

2. Procédé pour la préparation de dispersions aqueuses primaires et de matières aqueuses de revêtement, contenant des particules solides et/ou liquides de polymère dispersées et/ou émulsionnées et/ou des particules solides à noyau-enveloppe dispersées ayant un diamètre de particule ≤ 500 nm, par polymérisation en micro- ou mini-émulsion radicalaire contrôlée de
A) au moins un monomère à insaturation oléfinique et
B) au moins un monomère à insaturation oléfinique différent du monomère à insaturation oléfinique (A), de formule générale I
R¹R²C=CR³R⁴ (I)
dans laquelle les radicaux R¹, R², R³ et R⁴ représentent, indépendamment les uns des autres, des atomes d'hydrogène ou des groupes alkyle, cycloalkyle, alkylcycloalkyle, cycloalkylalkyle, aryle, alkylaryle, cycloalkylaryle, arylalkyle ou arylcycloalkyle, substitués ou non substitués, étant entendu qu'au moins deux des variables R¹, R², R³ et R⁴ représentent des radicaux aryle, arylalkyle ou arylcycloalkyle substitués ou non substitués, en particulier des radicaux aryle substitués ou non substitués,
en présence d'au moins
C) au moins un agent de réticulation hydrophobe pour le copolymère résultant des produits de départ (A) et (B).

3. Dispersions aqueuses primaires et matières aqueuses de revêtement selon la revendication 1 et procédé selon la revendication 2, **caractérisés en ce que** les radicaux aryle R¹, R², R³ et/ou R⁴ du composé (B) sont des radicaux phényle ou naphtyle, en particulier des radicaux phényle.

4. Dispersions aqueuses primaires et matières aqueuses de revêtement selon la revendication 1 ou 3 et procédé selon la revendication 2 ou 3, **caractérisés en ce que** les substituants dans les radicaux R¹, R², R³ et/ou R⁴ du composé (B) sont des atomes attirant les électrons ou repoussant les électrons ou des radicaux organiques, en particulier des atomes d'halogène, des radicaux nitrile, nitro, des radicaux alkyle, cycloalkyle, alkylcycloalkyle, cycloalkylalkyle, aryle, alkylaryle, cycloalkylaryle, arylalkyle et arylcycloalkyle, partiellement ou totalement halogénés ; des radicaux aryloxy, alkyloxy et cycloalkyloxy ; des radicaux arylthio, alkylthio et cycloalkylthio et/ou des groupes amino primaires, secondaires et/ou tertiaires.

5. Dispersions aqueuses primaires et matières aqueuses de revêtement selon l'une quelconque des revendications 1, 3 et 4 et procédé selon l'une quelconque des revendications 2 à 4, **caractérisés en ce qu'**on utilise en tant qu'agent de réticulation (C) des polyisocyanates bloqués, des tris(alcoxycarbonylamino)triazines et/ou des aminoplastes totalement éthérifiés.

6. Dispersions aqueuses primaires et matières aqueuses de revêtement selon l'une quelconque des revendications 1 et 3 à 5 et procédé selon l'une quelconque des revendications 2 à 5, **caractérisés en ce que** les monomères (A) et (B) sont copolymérisés en présence d'au moins un autre composé hydrophobe (D) différent de l'agent de réticulation (C).

7. Dispersions aqueuses primaires et matières aqueuses de revêtement et procédé selon la revendication 6, **caractérisés en ce que** les composés hydrophobes (D) consistent en des substances oligomères ou polymères de faible masse moléculaire, insolubles dans l'eau.

8. Dispersions aqueuses primaires et matières aqueuses de revêtement et procédé selon la revendication 7, **caractérisés en ce qu'**on utilise en tant que composés hydrophobes (D) des esters d'acides carboxyliques à insaturation α,β-mono-oléfinique, ayant de 3 à 6 atomes de carbone, avec des alcools ayant de 12 à 30 atomes de carbone dans le radical alkyle ; des esters d'alcool vinylique et/ou d'alcool allylique avec des acides alcane-monocarboxyliques, sulfoniques et/ou phosphoniques ayant de 12 à 30 atomes de carbone dans la molécule ; des amides d'acides carboxyliques à insaturation α,β-mono-oléfinique, ayant de 3 à 6 atomes de carbone, avec des alkylamines ayant de 12 à 30 atomes de carbone dans le radical alkyle ; des macromonomères à base de composés à insaturation oléfinique comportant en moyenne statistique au moins un groupe à insaturation oléfinique, en particulier en bout de chaîne, dans la molécule ; des macromonoméres polysiloxane comportant en moyenne statistique au moins un groupe à insaturation oléfinique, en particulier en bout de chaîne, dans la molécule ; des produits oligomères et/ou polymères de polymérisation, polycondensation et/ou polyaddition ; des régulateurs de masse moléculaire insolubles dans l'eau, en particulier des mercaptans ; des hydrocarbures aliphatiques, cycloaliphatiques et/ou aromatiques halogénés et/ou non halogénés ; des alcanols et/ou des alkylamines ayant au moins 12 atomes de carbone dans le radical alkyle ; des organosilanes et/ou organosiloxanes ; des huiles végétales, animales, semi-synthétiques et/ou synthétiques ; et/ou des colorants hydrophobes.

9. Dispersions aqueuses primaires et matières aqueuses de revêtement selon l'une quelconque des revendications 1 et 3 à 8 et procédé selon l'une quelconque des revendications 2 à 8, **caractérisés en ce que** les monomères (A) et (B) sont copolymérisés en présence d'émulsifiants et/ou de colloïdes protecteurs (E).

10. Dispersions aqueuses primaires et matières aqueuses de revêtement selon l'une quelconque des revendications 1 et 3 à 9 et procédé selon l'une quelconque des revendications 2 à 9, **caractérisés en ce qu'**on utilise en tant que monomères (A)
a1) des esters d'acide (méth)acrylique essentiellement dépourvus de groupes acides ;
a2) des monomères qui portent au moins un groupe hydroxy par molécule et sont essentiellement dépourvus de groupes acides ;
a3) des monomères qui portent par molécule au moins un groupe acide qui peut être converti en le groupe anion d'acide correspondant ;
a4) des esters vinyliques d'acides monocarboxyliques ramifiés en position alpha, ayant de 5 à 18 atomes de carbone dans la molécule ;
a5) des produits de réaction à base d'acide acrylique et/ou d'acide méthacrylique avec l'ester glycidylique d'un acide monocarboxylique ramifié en position alpha, ayant de 5 à 18 atomes de carbone par molécule ;
a6) des oléfines cycliques et/ou acycliques ;
a7) des (méth)acrylamides ;
a8) des monomères contenant des groupes époxy ;
a9) des hydrocarbures vinylaromatiques ;
a10) des nitriles ;
a11) des composés vinyliques, en particulier des dihalogénures de vinyle et/ou de vinylidène, la N-vinylpyrrolidone, des éthers vinyliques et/ou des esters vinyliques ;
a12) des composés allyliques, en particulier des éthers et esters allyliques ;
a13) des macromonomères polysiloxane qui ont une masse moléculaire moyenne en nombre Mn de 1 000 à 40 000 et comportent par molécule en moyenne de 0,5 à 2,5 doubles liaisons à insaturation éthylénique ; et/ou
a14) des monomères vinyliques contenant des groupements acryloxysilane, pouvant être préparés par réaction de silanes à fonction hydroxy avec l'épichlorhydrine et réaction subséquente du produit de réaction avec l'acide méthacrylique et/ou des esters d'hydroxyalkyle de l'acide (méth)acrylique ;
étant entendu que les monomères (a3) ne sont pas utilisés en tant que les seuls monomères (A).

11. Dispersions aqueuses primaires et matières aqueuses de revêtement et procédé selon la revendication 10, **caractérisés en ce qu'**on utilise au moins un monomère (A) qui contient des groupes fonctionnels réactifs qui peuvent participer à des réactions de réticulation avec les groupes fonctionnels réactifs complémentaires des agents de réticulation.

12. Dispersions aqueuses primaires et matières aqueuses de revêtement selon l'une quelconque des revendications 1 et 3 à 11 et procédé selon l'une quelconque des revendications 2 à 11, **caractérisés en ce que** la polymérisation en micro- ou mini-émulsion radicalaire contrôlée est amorcée par des-amorceurs générateurs de radicaux, hydrosolubles et/ou liposolubles.

13. Dispersions aqueuses primaires et matières aqueuses de revêtement selon l'une quelconque des revendications 1 et 3 à 12 et procédé selon l'une quelconque des revendications 2 à 12, **caractérisés en ce que** les particules dispersées sont des particules à noyau-enveloppe comportant des noyaux à base de matières solides organiques et des enveloppes à base de polymères qui contiennent au moins un monomère (A) et au moins un monomère (B) copolymérisés.

14. Dispersions aqueuses primaires et matières aqueuses de revêtement selon l'une quelconque des revendications 1 et 3 à 13 et procédé selon l'une quelconque des revendications 2 à 13, **caractérisés en ce que** les noyaux des particules à noyau-enveloppe sont préparés par polymérisation en micro- ou mini-émulsion radicalaire, en particulier radicalaire contrôlée.

15. Dispersions aqueuses primaires et matières aqueuses de revêtement selon l'une quelconque des revendications 1 et 3 à 14, **caractérisées en ce qu'**elles contiennent au moins un additif pour peintures (F).

16. Dispersions aqueuses primaires et matières aqueuses de revêtement selon l'une quelconque des revendications 1 et 3 à 15, **caractérisées en ce qu'**elles contiennent des composants durcissables par un rayonnement actinique.

17. Utilisation des dispersions aqueuses primaires et matières aqueuses de revêtement selon l'une quelconque des revendications 1 et 3 à 16 ou des dispersions aqueuses primaires et matières aqueuses de revêtement préparées conformément au procédé selon l'une quelconque des revendications 2 à 13, dans le premier peinturage et le peinturage de réparation d'automobiles, le peinturage industriel, y compris le peinturage de rubans en continu (*coil coating*), le peinturage de récipients (*container coating*) et le revêtement de composants électroniques, et le peinturage de meubles.

18. Subjectiles revêtus ou non d'un primaire, comportant au moins un revêtement de vernis mono- ou multicouche et/ou au moins un revêtement de peinture mono- ou multicouche colorant et/ou à effet, à base des dispersions aqueuses primaires et matières aqueuses de revêtement selon l'une quelconque des revendications 1 et 3 à 16 ou des dispersions aqueuses primaires et matières aqueuses de revêtement préparées conformément au procédé selon l'une quelconque des revendications 2 à 14.
